# FASCICULE DE BREVET EUROPEEN

(11) **EP 3 976 460 B1**
(45) Date de publication et mention de la délivrance du brevet: **27.03.2024**
(21) Numéro de dépôt: 20720835.6
(22) Date de dépôt: 29.04.2020
(51) Int. Cl.: B63B 21/66, G01V 1/20, G01V 1/38

(54) **DISPOSITIF SONAR, SYSTEME SONAR**
SONARVORRICHTUNG UND SONARSYSTEM
SONAR DEVICE AND SONAR SYSTEM

(30) Priorité: 29.05.2019 FR 1905728
(43) Date de publication de la demande: 06.04.2022
(73) Titulaire: THALES, 92190 Meudon (FR)
(72) Inventeur: SUPPA, Vito, 06903 SOPHIA ANTIPOLIS Cedex (FR); RICARD, Michel, 06903 SOPHIA ANTIPOLIS Cedex (FR)
(74) Mandataire: Atout PI Laplace
(86) Numéro de dépôt international: PCT/EP2020/061830
(87) Numéro de publication internationale: WO 2020/239345

(56) Documents cités:
- WO-A1-2017/054795
- FR-A1- 2 964 201
- GB-A- 2 564 523

## Description

L'invention concerne le domaine de la manutention de dispositifs sonars du type comprenant une partie dite active destinée à être immergée et remorquée par un bâtiment de surface via un câble lourd tracteur. La partie active comprend une antenne d'émission linéaire d'ondes acoustiques allongée selon un axe longitudinal de l'antenne. Cet axe longitudinal est destiné à s'étendre sensiblement verticalement en fonctionnement, lorsque l'antenne est totalement immergée, de sorte à émettre des ondes acoustiques principalement dans un plan horizontal. Le système sonar peut comprendre une antenne de réception linéaire permettant de détecter des échos issus des ondes acoustiques émises par l'antenne d'émission. L'antenne de réception linéaire est destinée à être tractée par le câble tracteur via l'antenne d'émission linéaire.

On connaît des dispositifs sonars dans lesquels le câble tracteur est fixé à une partie centrale située à proximité du centre de l'antenne d'émission linéaire selon son axe longitudinal. Pour venir récupérer l'antenne d'émission, initialement immergée, à bord d'un bâtiment de surface, il est connu d'utiliser un équipement de type bras, qui permet de venir recueillir l'antenne d'émission linéaire directement à sa sortie de l'eau, de la soulever et de la déplacer jusqu'au-dessus du pont du bâtiment de surface, par basculement et éventuellement translation du bras. Lors de cette manoeuvre, l'antenne d'émission reste toujours verticale. Une opération de décrochage de l'antenne d'émission du câble tracteur est prévue avant de venir enrouler le câble tracteur et l'antenne de réception linéaire autour d'un même treuil. L'antenne d'émission linéaire est stockée à bord du bâtiment de surface à côté du treuil.

Or, une antenne d'émission linéaire présente généralement une longueur de plusieurs mètres ce qui oblige à concevoir de grandes ouvertures à l'arrière du navire porteur pour permettre de récupérer cette antenne. En outre, il est fréquent qu'il faille créer une tranchée (« recess » en terminologie anglo-saxonne) dans le pont principal afin de pouvoir stocker l'antenne d'émission qui est trop longue pour être logée entre le pont principal et le pont supérieur.

On connaît d'autres types de systèmes sonars à grande antenne d'émission linéaire dans lesquels l'antenne d'émission est reliée au câble de sorte que l'antenne s'étende verticalement lorsqu'elle est remorquée par un câble. L'antenne d'émission est apte à pivoter par rapport au câble autour d'un axe horizontal perpendiculaire à l'axe de traction de l'antenne d'émission remorquée de sorte à s'étendre longitudinalement globalement parallèlement à l'axe du câble dans une orientation dite de capture. Ces systèmes comprennent des moyens de récupération qui permettent de remonter l'antenne d'émission à bord du navire porteur uniquement en enroulant le câble, le câble tirant l'antenne d'émission vers le navire selon l'axe du câble. L'antenne adopte l'orientation de capture à sa sortie de l'eau lors de l'étape de récupération, soit naturellement, soit sous l'action d'un actuateur. De la sorte, lorsque l'antenne passe au travers de l'ouverture ménagée dans le navire, son encombrement limité dans un plan transverse à l'axe du navire permet de limiter la taille de cette ouverture.

Toutefois, la récupération de l'antenne dans cette configuration de capture est défavorable à son stockage dans un volume limité. Par ailleurs, cette solution ne convient qu'aux dispositifs sonars comprenant une antenne linéaire à l'arrière de l'antenne d'émission. L'absence d'une traction exercée par une antenne de réception impose l'utilisation d'un mécanisme de récupération encombrant, par exemple du type bras basculant ou grue.

Un exemple de système de ce type est divulgué dans le document US 9,001,623. Après récupération, l'antenne est stockée, à bord du bâtiment de surface, dans une position allongée selon l'axe longitudinal du bâtiment de surface ce qui nécessite un bâtiment de surface de grande longueur susceptible d'offrir un local arrière de volume libre de grande longueur. Par ailleurs, des moyens sont prévus pour déconnecter le câble de l'antenne d'émission afin de pouvoir stocker l'antenne de réception sur un même treuil que le câble tracteur. Le document WO 2017/035660 A1 divulgue également ce type de système sonar. Il propose une solution qui évite la déconnexion et réduit le volume du dispositif sonar en venant stocker l'antenne d'émission linéaire sur le tambour du treuil avec son axe longitudinal sensiblement perpendiculaire à l'axe de rotation du treuil. Toutefois, cette orientation est peu stable et des moyens mécaniques, devant être mis en place par un opérateur, doivent être prévus pour fixer l'antenne au tambour du treuil.

Par ailleurs, lors de la récupération des antennes en position allongée, elles présentent une orientation peu stable et incontrôlable ce qui accroit le risque d'un heurt avec la coque du bâtiment de surface, en particulier lorsque la mer est agitée. Ces solutions requièrent donc une protection pour protéger l'antenne en cas de heurts. Le document US 9,001,623 prévoir un nid remorqué entourant l'antenne dans laquelle l'antenne vient se loger lorsqu'elle est allongée. Ce nid protège l'antenne en cas d'éventuels heurts mais rend la solution plus complexe.

Une autre solution divulguée dans la demande de brevet EP 2 232 294 A1 déposée par la demanderesse consiste à prévoir une antenne linéaire d'émission souple configurée et fixée aux câble de traction et à l'antenne de réception de sorte à s'étendre linéairement sensiblement verticalement lors du remorquage et de sorte à se courber pour venir s'enrouler autour d'un tambour d'un treuil tout comme le câble de traction et l'antenne de réception. Toutefois, la mise en oeuvre opérationnelle de cette solution nécessite des réglages et est dédiée à une antenne légère difficile à réaliser avec un bon niveau de performances, les transducteurs électroacoustiques lourds permettant d'émettre avec un bon niveau sonore.

La demande de brevet WO2017/054795 A1 divulgue un dispositif sonar comprenant une antenne d'émission flexible et des moyens dits de mise sous tension, comme par exemple une ancre flottante, permettant de faire adopter à l'antenne d'émission, lorsqu'elle est remorquée, une configuration linéaire dans laquelle elle est verticale. Cette solution présente des inconvénients similaires à ceux de la solution divulguée dans la demande de brevet EP 2 232 294 A. Les documents GB2564523A, FR2964201A1 divulguent aussi des systèmes de sonar tracté.

Un but de l'invention est de limiter au moins un des inconvénients précités.

A cet effet, l'invention a pour objet un système sonar selon la revendication 1.

Dans un mode de réalisation particulier, le dispositif tracté est le corps remorqué.

Avantageusement, la première suspente et la deuxième suspente présentent chacune une longueur fixe.

Avantageusement, la deuxième extrémité de la première suspente est attachée à la première extrémité longitudinale du corps remorqué et la deuxième extrémité de la deuxième suspente est attachée à la deuxième extrémité longitudinale du corps remorqué.

Dans un mode de réalisation, le dispositif sonar comprend un corps allongé souple de flottabilité sensiblement neutre destiné à être tracté par le câble tracteur et comprenant une deuxième antenne acoustique comprenant une pluralité de transducteurs électroacoustiques répartis le long du corps allongé souple, le corps allongé souple est relié au câble tracteur via l'ensemble d'au moins un corps remorqué, le corps remorqué étant relié au corps allongé souple de sorte que le corps allongé souple exerce une traction sur le corps remorqué en un troisième point de fixation situé à proximité de la première extrémité longitudinale du corps remorqué et un quatrième point de fixation situé à proximité de la deuxième extrémité longitudinale du corps remorqué.

Par exemple, au moins un corps remorqué de l'ensemble d'au moins un corps remorqué est relié au corps remorqué allongé souple par une troisième suspente et une quatrième suspente, une première extrémité de la troisième suspente étant attachée au corps remorqué en un troisième point de fixation situé à proximité de la première extrémité longitudinale du corps remorqué et une première extrémité de la quatrième suspente étant attachée au corps remorqué en un quatrième point de fixation situé à proximité de la deuxième extrémité longitudinale du corps remorqué. Ce corps remorqué est le même corps remorqué ou un autre corps remorqué que celui qui est relié à la première et à la deuxième suspente.

L'ensemble d'au moins un corps remorqué comprend un unique corps remorqué ou plusieurs corps remorqués.

Dans une réalisation particulière, l'ensemble d'au moins un corps remorqué comprend plusieurs corps remorqués, le dispositif sonar comprenant au moins une ligne reliant deux corps de l'ensemble remorqué et comprenant au moins un transducteur électroacoustique.

L'invention se rapporte à un système sonar comprenant le dispositif sonar et un dispositif de manutention destiné à mettre à l'eau et à récupérer le dispositif sonar depuis le bâtiment de surface, le dispositif de manutention comprenant un treuil comprenant un premier tambour apte à tourner autour d'un premier axe de rotation pour enrouler le câble tracteur autour du premier tambour.

Le dispositif de manutention comprend un ensemble d'au moins un déflecteur convexe et présentant globalement une forme d'une portion d'un cylindre s'étendant longitudinalement selon un axe du déflecteur, le déflecteur étant disposé de façon à s'étendre sensiblement horizontalement, par état de mer calme, et sensiblement perpendiculairement à un plan vertical sensiblement parallèle à un axe de traction exercé sur le câble de traction par le dispositif de manutention lors d'une première étape d'enroulement lors de laquelle le premier tambour est entraîné en rotation autour du premier axe de sorte que le câble tracteur vienne s'enrouler autour du premier tambour et de façon que la première suspente et la deuxième suspente viennent en appui sur le déflecteur pour être déviées par le déflecteur de sorte que l'axe longitudinal du corps remorqué soit orienté sensiblement parallèlement à l'axe du déflecteur lorsque le corps remorqué est totalement émergé et suspendu à la première suspente et à la deuxième suspente.

Avantageusement, l'axe d'au moins un déflecteur de l'ensemble est sensiblement parallèle au premier axe de rotation.

Avantageusement, au moins un déflecteur de l'ensemble d'au moins un déflecteur est disposé de sorte que, lors de la première étape d'enroulement, la première suspente et la deuxième suspente sont aptes à venir en appui sur le déflecteur, lorsque le corps remorqué est totalement immergé.

Avantageusement, l'ensemble comprend au moins un déflecteur disposé en amont du premier tambour, vu de la première suspente et de la deuxième suspente initialement immergées, lors de la première étape d'enroulement.

L'invention se rapporte également à un système sonar dans lequel le treuil comprend un ensemble d'au moins un deuxième tambour entourant le premier tambour et étant apte à tourner par rapport à un bâti du treuil autour d'un deuxième axe de rotation sensiblement parallèle au premier axe de rotation, le treuil étant apte à être dans un état de découplage dans lequel le premier tambour et le deuxième tambour sont découplés en rotation autour du premier axe de rotation et du deuxième axe de rotation, de sorte à permettre d'enrouler le câble tracteur autour du premier tambour lors de la première étape d'enroulement lors de laquelle le premier tambour est entraîné en rotation autour du premier axe, le deuxième tambour étant apte à être dans un état ouvert, dans lequel le deuxième tambour présente une ouverture de réception à travers laquelle le corps remorqué est susceptible de passer pour pénétrer à l'intérieur d'un volume qui entoure le premier tambour et qui est entouré par le deuxième tambour, le treuil étant apte à être dans un état de couplage dans lequel le premier tambour et le deuxième tambour sont couplés en rotation autour du deuxième axe de rotation, de sorte à permettre d'enrouler le corps allongé souple autour du deuxième axe de rotation lors d'une deuxième étape d'enroulement lors de laquelle le deuxième tambour est entraîné en rotation autour du deuxième axe. Le corps remorqué peut être susceptible de traverser l'ouverture de réception, pendant la première étape d'enroulement ou en dehors de cette étape.

Avantageusement, le deuxième tambour est apte à être dans une position angulaire de réception, autour du deuxième axe par rapport au bâti, dans laquelle l'ouverture de réception est traversée par le câble tracteur et le corps remorqué lors de la première étape d'enroulement.

Avantageusement, le dispositif de manutention est configuré pour mettre en oeuvre l'étape suivante lors d'un procédé de récupération du dispositif sonar initialement immergé et relié au tambour via le câble tracteur 2 : la première étape d'enroulement lors de laquelle le premier tambour est entraîné en rotation autour du premier axe de sorte que le câble tracteur vienne s'enrouler autour du premier tambour, et de façon que la première suspente et la deuxième suspente viennent en appui sur le déflecteur pour être déviées par le déflecteur de sorte que l'axe longitudinal du corps remorqué soit orienté sensiblement parallèlement à l'axe du déflecteur, lorsque le corps remorqué est totalement émergé et suspendu à la première suspente et à la deuxième suspente.

L'invention se rapporte également au procédé de récupération qui comprend cette étape.

Avantageusement, le dispositif de manutention est configuré pour mettre en oeuvre la première étape d'enroulement jusqu'à ce que le corps remorqué rentre dans le volume délimité par le deuxième tambour au travers de l'ouverture de réception, puis une deuxième étape d'enroulement lors de laquelle le deuxième tambour du dispositif de manutention, se trouvant dans le deuxième état, est entraîné en rotation autour du deuxième axe de rotation de sorte à enrouler le corps linéaire souple autour du deuxième tambour.

D'autres caractéristiques et avantages de l'invention apparaîtront à la lecture de la description détaillée qui suit, faite à titre d'exemple non limitatif et en référence aux dessins annexés dans lesquels :
[Fig.1] la figure 1 représente schématiquement un système sous-marin selon l'invention comprenant un dispositif de manutention selon un premier mode de réalisation et un dispositif sous-marin selon un premier mode de réalisation dans un état de remorquage,
[Fig.2] la figure 2 représente schématiquement le système sous-marin de la figure 1 lorsque le corps remorqué sort de l'eau,
[Fig.3] la figure 3 représente schématiquement le système sous-marin de la figure 1, lorsque le corps remorqué se rapproche du bâtiment de surface et est suspendu à la première suspente et à la deuxième suspente,
[Fig.4] la figure 4 représente schématiquement le système sous-marin de la figure 1, lorsque le corps remorqué est récupéré à bord du bâtiment de surface,
[Fig.5] la figure 5 représente schématiquement un système sonar comprenant un dispositif de manutention, selon un deuxième mode de réalisation, lors d'une phase de remorquage d'un dispositif sous-marin, selon un deuxième mode de réalisation,
[Fig.6] la figure 6 représente schématiquement le système sonar de la figure 5 lors d'une phase de récupération du corps remorqué,
[Fig.7] la figure 7 représente schématiquement le système sonar de la figure 5 lors d'une phase de stockage du corps remorqué,
[Fig.8] la figure 8 représente schématiquement un système sonar comprenant un dispositif de manutention, selon un troisième mode de réalisation, lors d'une phase de récupération du dispositif sonar de la figure 5,
[Fig. 9] la figure 9 représente schématiquement différentes phases d'un procédé de récupération du dispositif sonar de la figure 5 par le dispositif de manutention de la figure 8,
[Fig.10] la figure 10 représente schématiquement un exemple de corps remorqué de forme différente de celui des figures 1 à 7,
[Fig.11] la figure 11 représente schématiquement un dispositif sous-marin comprenant plusieurs corps remorqués,
[Fig.12] la figure 12 représente schématiquement un dispositif sous-marin comprenant plusieurs corps remorqués reliés entre eux de façon différente de ceux de la figure 12.

D'une figure à l'autre, les mêmes éléments sont repérés par les mêmes références.

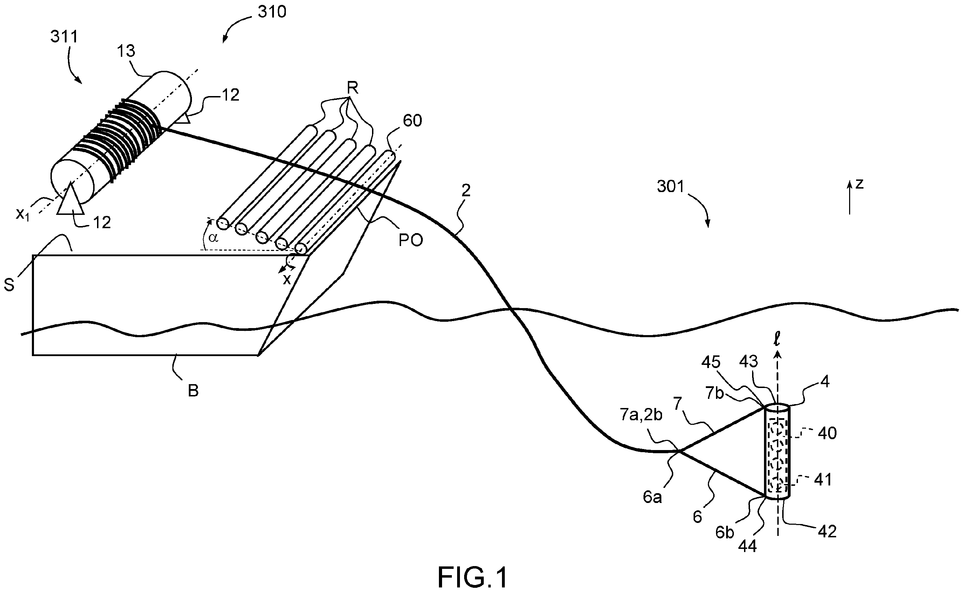

L'invention se rapporte à un dispositif sonar 301, dont un premier mode de réalisation est représenté en figure 1. Le dispositif sonar 301 selon l'invention est destiné à être remorqué par un bâtiment de surface B. L'invention se rapporte également à un système sonar comprenant le dispositif sonar 301 selon l'invention et un dispositif de manutention 310 pour mettre à la mer et récupérer le dispositif sonar 301 selon l'invention depuis le bâtiment de surface B. L'invention se rapporte en outre à un bâtiment de surface B comprenant le système sonar selon l'invention dans lequel le dispositif sonar 301 est relié au dispositif de manutention 310 installé à bord du bâtiment de surface.

Le dispositif sonar 301 selon l'invention comprend une partie active destinée à fonctionner à l'état totalement immergé lorsque le dispositif sonar est remorqué.

La partie active comprend une antenne d'émission d'ondes acoustiques linéaire 40, ou plus généralement une antenne acoustique d'émission linéaire, allongée selon l'axe longitudinal I comprenant une pluralité de transducteurs électroacoustiques 41 sensiblement alignés selon l'axe longitudinal I.

L'axe longitudinal I de l'antenne d'émission linéaire 40 est destiné à s'étendre sensiblement selon un axe vertical z en fonctionnement lorsque le dispositif sonar 301 est immergé et remorqué par le bâtiment porteur, l'antenne d'émission linéaire 40 étant totalement immergée. De la sorte, l'antenne d'émission linéaire 40 émet des ondes acoustiques principalement dans un plan horizontal. L'axe vertical z est défini par la force de gravité. Il s'agit d'un axe sensiblement perpendiculaire à la surface de la mer par état de mer calme qui définit alors un plan horizontal.

L'antenne d'émission linéaire 40 est intégrée dans un corps remorqué 4 selon l'axe longitudinal I. Le corps remorqué 4 s'étend, selon l'axe longitudinal, depuis une première extrémité longitudinale 42 du corps remorqué 4 jusqu'à une deuxième extrémité longitudinale 43 du corps remorqué 4.

La première extrémité longitudinale 42 est avantageusement solidaire de la deuxième extrémité longitudinale 43.

Ainsi, l'antenne d'émission linéaire 40 intégrée dans le corps 4 ne se déforme ni lors du remorquage par le bâtiment de surface lorsqu'elle est totalement immergée, ni lors de la récupération de l'antenne à bord du bâtiment de surface, ni lors de son stockage à bord du bâtiment de surface. Cette configuration permet de connaître précisément les caractéristiques du diagramme d'émission de l'antenne. Cette configuration facilite la réalisation technique du dispositif sonar en garantissant l'alignement des transducteurs électroacoustiques. Des étapes fastidieuses de réglage du dispositif sonar pour garantir cette géométrie en remorquage ne sont pas nécessaires.

Un dispositif tracté, qui est le corps remorqué 4 dans l'exemple non limitatif des figures, est configuré et relié au câble tracteur 2 et au corps 3 de sorte que le corps remorqué 4 soit apte à adopter une orientation sensiblement verticale (I sensiblement parallèle à z) lorsqu'il (le corps remorqué) est remorqué via le câble 2 en étant totalement immergé.

Afin de faciliter l'obtention d'une orientation verticale de l'antenne d'émission linéaire 40 en fonctionnement, le dispositif tracté, par exemple le corps remorqué 4 dans l'exemple des figures, est équilibré de sorte à présenter, à l'équilibre hydrostatique, c'est-à-dire lorsqu'il est soumis uniquement à la force de gravité et à la poussée d'Archimède, une orientation d'équilibre hydrostatique dans laquelle l'axe longitudinal I est sensiblement vertical (parallèle à l'axe z) et dans laquelle la a première extrémité longitudinale 42 du corps remorqué 4 présente une profondeur supérieure à sa deuxième extrémité longitudinale 43. Autrement dit, dans cette orientation d'équilibre hydrostatique, la première extrémité longitudinale 42 est plus éloignée du niveau moyen de la surface de la mer que la deuxième extrémité longitudinale 43.

A cet effet, le corps remorqué 4 comprend, par exemple, un lest de densité supérieure à la densité de l'eau à proximité de la première extrémité longitudinale 42 et un flotteur présentant une flottabilité positive à proximité de la deuxième extrémité longitudinale 43.

En variante, le corps remorqué comprend un lest de densité supérieure à la densité de l'eau à proximité de la première extrémité longitudinale 42 ou un flotteur présentant une flottabilité positive à proximité de la deuxième extrémité longitudinale 43.

Le corps remorqué 4 peut présenter une flottabilité sensiblement neutre mais ce n'est pas indispensable. En variante, le corps présente une flottabilité négative ce qui lui permet d'atteindre des profondeurs plus importantes.

Dans la réalisation des figures, le dispositif tracté est le corps remorqué.

Dans une variante, le dispositif tracté comprend le corps remorqué et un ensemble d'au moins un lest et/ou un ensemble d'au moins un flotteur. Le corps remorqué étant configuré et l'ensemble d'au moins un lest et/ou l'ensemble d'au moins un flotteur étant configurés et reliés au corps remorqué de sorte que le corps remorqué présente l'orientation requise (I sensiblement vertical) à l'équilibre hydrostatique.

Le dispositif sonar 301 comprend un câble tracteur 2 destiné à être relié au bâtiment de surface B et, plus particulièrement, au dispositif de manutention 310. Le câble tracteur 2 est relié au corps remorqué 4 qui est destiné à être tracté par le bâtiment de surface B via le câble tracteur 2. Le câble tracteur peut être un câble nu, un câble gainé, ou un câble caréné.

Le câble tracteur 2 présente avantageusement une flottabilité négative. On parle alors de câble lourd. Le poids du câble permet alors de positionner le corps remorqué en profondeur.

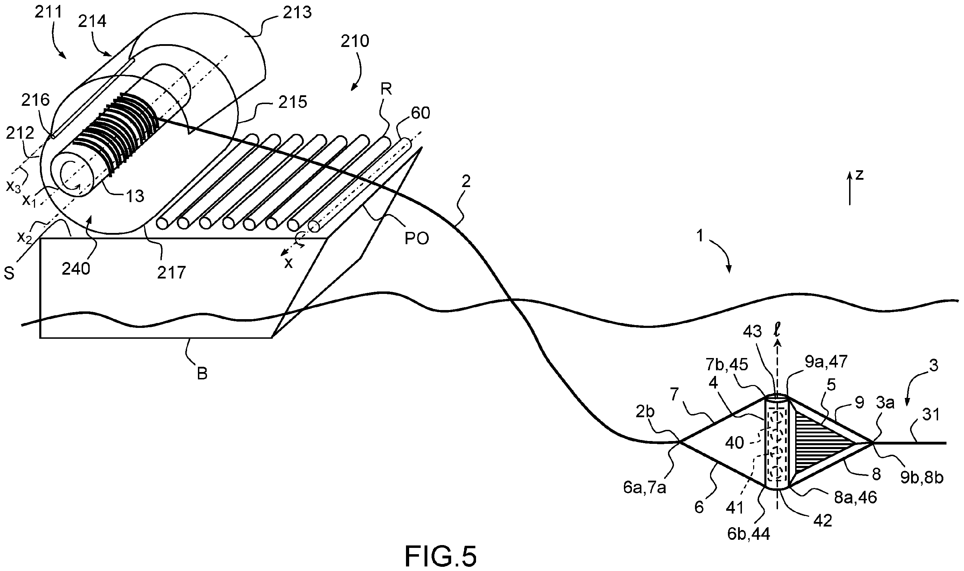

Le dispositif sous-marin 301 comprend en outre un dispositif d'attache, comprenant, comme visible en figure 5, une première suspente 6 et une deuxième suspente 7 présentant sensiblement la même longueur, et reliant chacune le câble tracteur 2 au corps remorqué 4. Autrement dit, la longueur des deux suspentes diffère au plus de 5% de la longueur d'une des suspentes.

Si les longueurs entre les suspentes diffèrent légèrement en respectant la tolérance des 5%, la première suspente 6 présente une longueur inférieure ou égale à la longueur de la deuxième suspente 7 pour une bonne maîtrise de l'orientation du corps remorqué mais les suspentes présentent, de préférence, une même longueur pour une meilleure maîtrise de l'orientation du corps remorqué.

Les suspentes sont des corps allongés souples. Il s'agit, par exemple, de câbles, ou de cordes, de bandes ou de chaînettes. Chaque suspente peut être une portion d'un élément souple plus long que la suspente, se prolongeant au-delà de la première extrémité et/ou de la deuxième extrémité de la suspente ou bien un élément souple de même longueur que la suspente.

Les suspentes 6 et 7 présentent chacune une longueur fixe ou invariable. Autrement dit, les suspentes ne s'allongent pas lors des opérations de mise à l'eau, récupération de stockage et de remorquage du dispositif sonar 301. Ce mode de réalisation présente l'avantage d'être simple, économique et robuste. Il ne nécessite pas de mécanisme pour faire varier les longueurs des suspentes.

En variante, au moins une des deux suspentes 6 et 7 présente une longueur variable. Par exemples, les suspentes 6 et 7 présentent une longueur variable. On peut ainsi faire varier la longueur d'une ou plusieurs suspentes lors de la récupération ou de la mise à l'eau du corps remorqué.

Dans une variante, le dispositif tracté comprend les suspentes 6 et 7 et une des suspentes comprend un lest et l'autre suspente comprend un flotteur de façon que le corps remorqué présente une orientation verticale lorsque le corps remorqué 4 est tracté par le câble tracteur 2.

Le câble tracteur 2 comprend une première extrémité, destinée à être reliée au bâtiment de surface B et plus particulièrement au dispositif de manutention 310, et une deuxième extrémité 2b reliée à une première extrémité 6a de la première suspente 6. Une deuxième extrémité 6b de la première suspente 6 est attachée au corps remorqué en un premier point de fixation 44 du corps remorqué 4 situé à proximité de la première extrémité longitudinale 42. La deuxième suspente 7 comprend une première extrémité 7a reliée à la deuxième extrémité 2b du câble tracteur 2 et une deuxième extrémité 7b attachée au corps remorqué 4 en un deuxième point de fixation 45 du corps remorqué 4 situé à proximité de la deuxième extrémité longitudinale 43. Les deux points de fixation 44 et 45 sont distants l'un de l'autre selon l'axe longitudinal I. Le deuxième point de fixation 45 est solidaire du premier point de fixation 44.

Par point de fixation, on entend le point sur lequel la suspente exerce une force de traction sur le corps remorqué 4. La force de traction exercée par le câble tracteur 2 sur la suspente est reportée sur le point de fixation par la suspente.

Sur les figures, les extrémités 6a et 7a sont fixes par rapport à l'extrémité 2b du câble tracteur 2.

Les deux suspentes peuvent être attachées au câble tracteur.

Avantageusement, chacune des deux suspentes présente une raideur plus faible que celle du câble tracteur 2.

En variante, une des deux suspentes est une portion du câble tracteur. Autrement dit, le diamètre du câble continu est sensiblement le même sur toute la longueur du câble continu.

Avantageusement, la raideur du câble continu est sensiblement fixe le long du câble continu. Autrement dit, la raideur présente sensiblement la même valeur sur toute la longueur du câble continu.

Les suspentes 6 et 7 sont agencées de sorte à former un V lorsqu'elles sont tendues. Le V comprend un fond auquel est fixée la deuxième extrémité 2b du câble.

Les suspentes 6, 7 peuvent être fixées de façon définitive ou amovible au corps remorqué 4.

Le corps remorqué 4 peut être relié au câble tracteur par seulement deux suspentes dont la première suspente 6 et la deuxième suspente 7. Dans une variante, le dispositif sonar présente un ensemble d'au moins une suspente intermédiaire reliant le câble tracteur au corps remorqué en étant fixée au corps remorqué en un point de fixation disposé entre le premier point de fixation 44 et le deuxième point de fixation 45.

Le dispositif sonar selon l'invention présente, de par son dispositif d'attache particulier, l'avantage de permettre la récupération et la mise à l'eau simples et relativement sécurisées du corps remorqué 4 depuis un bâtiment de surface B tout en maintenant la géométrie de l'antenne d'émission linéaire 40 fixe ce qui assure un réglage aisé du dispositif. L'utilisation d'un bras basculant ou d'une grue n'est pas indispensable.

Le dispositif sonar 301, initialement immergé de sorte que le corps remorqué 4 est totalement immergé, peut être récupéré et mis à l'eau de façon simple depuis le bâtiment de surface B, par un dispositif de manutention 310 léger et simple comprenant :
- un treuil 311 comprenant premier tambour 13 destiné à tourner autour d'un premier axe de rotation x1, par rapport à un bâti 12 du treuil fixé à une structure S du bâtiment de surface B, pour venir enrouler le câble tracteur 2 autour du premier tambour 13,
- un déflecteur 60 étant une surface de friction convexe présentant globalement une forme d'une portion de cylindre (non nécessairement à section circulaire) s'étendant longitudinalement selon un axe du déflecteur x, le déflecteur 60 étant disposé de façon à s'étendre sensiblement horizontalement, par état de mer calme, et sensiblement perpendiculairement à un plan vertical sensiblement parallèle à un axe de traction exercé sur le câble tracteur 2 par le dispositif de manutention 310 lors d'une première étape d'enroulement lors de laquelle le premier tambour 13 est entraîné en rotation autour du premier axe x1 par rapport au bâti 12, de sorte que le câble tracteur 2 vienne s'enrouler autour du premier tambour 13.

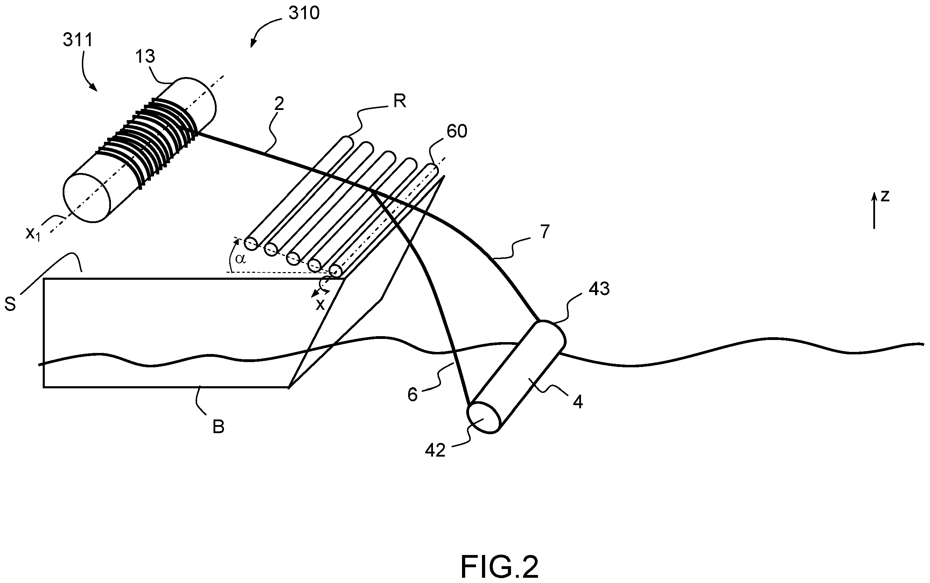

Le déflecteur 60 est en outre disposé de façon que la première suspente 6 et la deuxième suspente 7 viennent en appui sur le déflecteur 60 pour être déviées par le déflecteur 60 lors de la première étape d'enroulement de sorte que l'axe longitudinal I s'étende sensiblement parallèlement à l'axe x du déflecteur 60, lorsque le corps remorqué 4 est totalement émergé et suspendu aux suspentes 6 et 7 comme visible en figures 2 à 3 et expliqué plus en détails par la suite. Les suspentes 6 et 7 sont alors tendues et linéaires entre le déflecteur et le corps allongé. Autrement dit, lorsque le corps remorqué 4 est suspendu aux suspentes 6 et 7 déviées par le déflecteur 60, l'axe longitudinal I est sensiblement parallèle à l'axe du déflecteur x.

En effet, comme représenté en figure 1, lorsque le dispositif sonar est remorqué par le bâtiment de surface B, le corps remorqué 4 étant totalement immergé et remorqué via le câble tracteur 2, les deux suspentes 6 et 7 sont sensiblement tendues et le corps remorqué 4 est sensiblement vertical (c'est-à-dire avec son axe longitudinal sensiblement vertical) du fait des forces hydrostatiques et des efforts de traînée agissant sur le corps remorqué lorsque la forme du corps allongé est adaptée, par exemple lorsque la forme du corps remorqué 4 est sensiblement symétrique par rapport à un plan perpendiculaire à l'axe longitudinal I et par rapport à un plan contenant l'axe longitudinal I destiné à contenir le câble tracteur lors du remorquage.

Le câble tracteur 2 est apte à être en appui sur le déflecteur 60 pour être dévié par le déflecteur 60 dans le plan vertical contenant le câble tracteur 2 lors du remorquage du dispositif sonar, le corps allongé étant totalement immergé. Cela est vrai lorsque la vitesse de remorquage du navire est inférieure ou égale à un certain seuil pour une implantation donnée du dispositif de manutention à bord du bâtiment de surface B.

Tant que le corps remorqué 4 est complètement immergé (même à l'arrêt), le corps remorqué 4 reste sensiblement vertical (axe longitudinal I sensiblement vertical) du fait des forces hydrostatiques lorsqu'il est configuré pour être sensiblement vertical lorsqu'il est soumis uniquement à la poussée d'Archimède et à la gravité, par exemple lorsqu'il comprend un flotteur à proximité de la deuxième 43 extrémité et un lest à proximité de la première extrémité 42.

Lors d'une première étape d'enroulement, lors de laquelle le premier tambour 13 est entraîné en rotation autour du premier axe x1, le câble tracteur 2 vient s'enrouler autour du premier tambour 13.

Le corps remorqué 4 remonte progressivement à la surface. Du fait de l'équilibrage du corps remorqué 4, la deuxième extrémité 43 arrive avant la première extrémité 42 à la surface de l'eau. Lorsque la deuxième extrémité 43 est au-dessus de la surface de l'eau, la poussée d'Archimède n'est plus suffisante pour maintenir le corps remorqué 4 vertical, la deuxième extrémité longitudinale 43 du corps remorqué 4 a tendance à basculer sous l'effet de son poids, c'est-à-dire à s'éloigner de l'orientation verticale, pour tendre à adopter une orientation sensiblement horizontale (l'axe longitudinal I est sensiblement horizontal) comme représenté en figure 2.

Dans l'exemple non limitatif de la figure 2, les deux suspentes 6, 7 sont suffisamment longues pour pouvoir être en appui et déviées par le déflecteur 60 comme représenté en figure 2, alors que le corps remorqué 4 est toujours immergé, lorsque le dispositif remorqué est tracté, par le bâtiment de surface.

Avantageusement, les deux suspentes 6, 7 sont suffisamment longues pour être en appui et déviées par le déflecteur 60 comme représenté en figure 2, alors que le corps remorqué 4 est toujours immergé, lorsque le dispositif remorqué est remorqué par le bâtiment de surface lorsque la vitesse est inférieure ou égale à une vitesse maximale de remorquage lors de la récupération du dispositif sonar, par état de mer calme. La vitesse maximale de remorquage lors de la récupération du corps est inférieure à 10 noeuds et, de préférence, supérieure ou égale à 6 noeuds.

Dans ce cas, lorsque le corps remorqué 4 arrive à la surface de l'eau, la première suspente 6 étant en appui sur le déflecteur 60 et déviée par le déflecteur 60 le corps remorqué 4 bascule sous l'effet de son poids, la deuxième extrémité 43 du corps remorqué 4 entraînant avec elle la deuxième extrémité 7b de la deuxième suspente 7 qui tend à rester tendue. Le corps remorqué 4 bascule ainsi progressivement lors de la première étape d'enroulement, c'est-à-dire lorsque la rotation du premier tambour 13 autour de l'axe x1 se poursuit dans le même sens de sorte que le câble 2 exerce sur les suspentes 6, 7, une traction vers le premier tambour dans un plan sensiblement perpendiculaire à l'axe x, jusqu'à ce que la deuxième suspente 7 vienne en appui sur le déflecteur 60 pour être déviée par le déflecteur 60 comme représenté en figure 2.

Quand les deux suspentes 6 et 7 sont en appui et déviées par le déflecteur 60 elles sont tendues entre le déflecteur 60 et l'objet remorqué 4. Comme les deux suspentes 6 et 7 présentent la même longueur et le déflecteur 60 présente une section sensiblement fixe le long de l'axe x, les portions des suspentes 6 et 7 situées entre leurs zones d'appui respectives sur le déflecteur 60 et le corps remorqué 4 présentent la même longueur et le corps remorqué 4 adopte, par état de mer calme, une orientation dite de manutention dans laquelle l'axe longitudinal I est sensiblement parallèle à l'axe x du déflecteur 60.

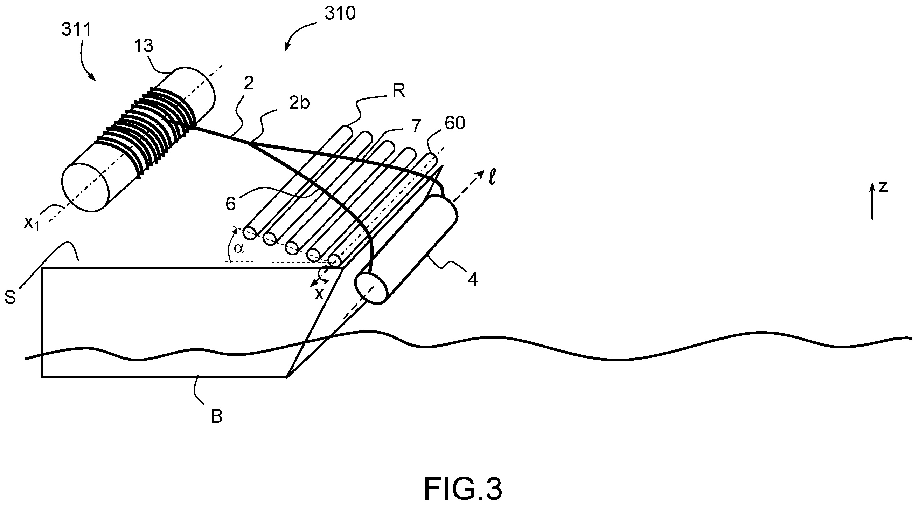

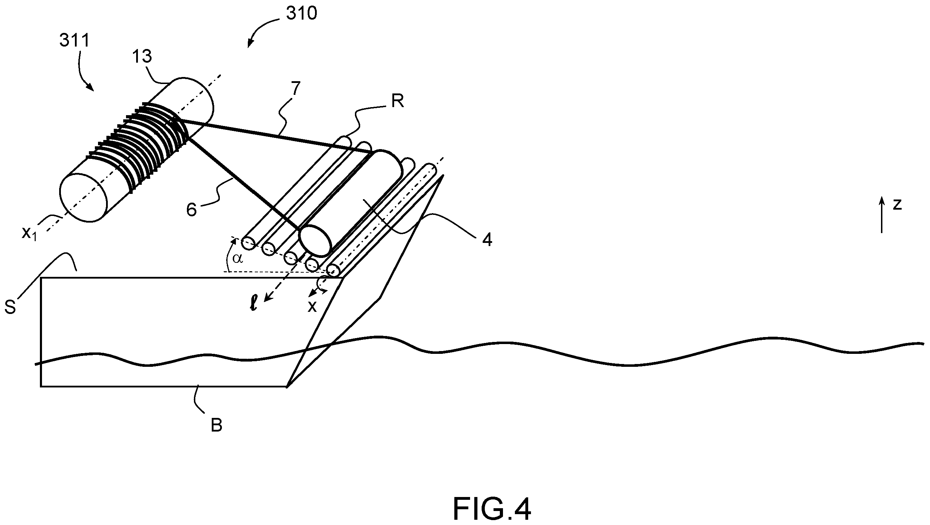

En poursuivant la rotation du premier tambour 13 dans le même sens, le corps remorqué 4 totalement émergé suspendu aux suspentes 6 et 7 présente, par état de mer calme, l'attitude de manutention dans laquelle son axe longitudinal I est sensiblement parallèle à l'axe du déflecteur comme représenté en figure 3. Par état de mer agitée, l'orientation du corps remorqué 4 peut varier mais il est maintenu de plus en plus fermement dans l'orientation de manutention à mesure que le corps remorqué 4 se rapproche du déflecteur 60, c'est-à-dire à mesure que la longueur des portions des suspentes 6 et 7 situées entre leurs zones d'appui sur le déflecteur 60 et le corps remorqué 4 diminue. La liberté de mouvement du corps remorqué 4 se réduit, comme visible en figures 3 et 4, jusqu'à ce qu'il vienne en appui sur le déflecteur 60 et soit récupéré à bord du bâtiment de surface B comme visible en figure 4.

A l'inverse, lors d'un procédé de mise à l'eau du dispositif sonar, le corps remorqué est maintenu sensiblement dans l'orientation de manutention par les deux suspentes en appui sur le déflecteur jusqu'à son immersion.

Le dispositif d'attache par suspentes 6, 7 du dispositif sonar 301 selon l'invention permet de sécuriser la mise à l'eau et la récupération d'un corps remorqué 4 depuis un bâtiment de surface B ce qui limite le risque de chocs entre le corps remorqué 4 et la poupe du bâtiment de surface B.

Ce dispositif sonar 301 est, du fait de la simplicité et de la relative sécurisation de la récupération et de la mise à l'eau du corps remorqué 4 depuis un bâtiment de surface, bien adapté dans le cas d'emploi à bord d'un USV.

Par ailleurs, la récupération du corps remorqué 4 dans l'orientation de manutention permet de prévoir une ouverture de hauteur réduite à l'arrière du bâtiment de surface et, d'éviter la formation de tranchées ou recess dans le pont du bâtiment de surface et de limiter la taille de la zone de stockage de ce corps remorqué le long de l'axe longitudinal du bâtiment de surface, c'est-à-dire selon l'axe perpendiculaire à l'axe x. L'orientation de manutention favorise également son stockage stable et peu encombrant sur le tambour d'un treuil d'axe sensiblement parallèle à l'axe x.

L'axe x est avantageusement sensiblement perpendiculaire à l'axe longitudinal du bâtiment de surface. Cela permet de stocker le corps remorqué en étant maintenu en roulis et tangage.

Le déflecteur 60 présente sensiblement une forme d'une portion angulaire, réalisée autour de l'axe x, d'un cylindre d'axe x. Dans le mode de réalisation non limitatif des figures 1 à 4, le déflecteur 60 est formé par un rouleau monté tournant par rapport au bâtiment porteur autour de son axe de rotation x. Cela permet de limiter les frottements entre le déflecteur 60 et le dispositif sonar lors des opérations de mise à l'eau et de récupération. En variante, le rouleau R est fixe par rapport au bâtiment de surface B.

Dans la réalisation des figures 1 à 4, le dispositif de manutention comprend un ensemble de rouleaux R cylindriques adjacents d'axes longitudinaux sensiblement parallèles les uns aux autres et alignés selon un axe sensiblement, horizontal par état de mer calme, et perpendiculaire à l'axe x.

Avantageusement, comme visible en figure 4, les rouleaux R sont configurés et disposés de sorte que le corps remorqué 4, orienté de sorte que l'axe I soit sensiblement parallèle à l'axe x, soit apte à reposer sur deux rouleaux R qui empêchent le mouvement du corps remorqué 4 selon l'axe selon lequel les rouleaux R sont alignés. Ainsi, les deux rouleaux adjacents forment un nid permettant de stocker le corps remorqué 4.

Avantageusement, l'axe selon lequel les rouleaux R sont alignés peut être incliné par rapport à l'horizontale par état de mer calme, comme visible en figure 4, ou horizontal par état de mer calme comme représenté en figures 5 à 7. L'inclinaison est favorable à un maintien stable du corps remorqué en tangage sous l'effet de la gravité et de la traction des suspentes. En outre, l'inclinaison autorise une remise à l'eau aisée.

Avantageusement, les rouleaux R sont dimensionnés de sorte que le corps remorqué 4 reposant sur deux rouleaux adjacents soit uniquement en contact physique direct avec les deux rouleaux R adjacents. Cela permet de limiter les risques de détérioration du corps remorqué 4.

En figures 1 à 4, l'axe x du déflecteur 60 est sensiblement parallèle au premier axe de rotation x1 du premier tambour 13. Ces axes pourraient en variante ne pas être parallèles, par exemple dans le cas où une poulie dévierait, dans un plan horizontal, l'axe du câble tracteur 2 entre le déflecteur 60 et le premier tambour.

En figures 1 à 4, les suspentes 6 et 7 sont fixées aux extrémités longitudinales du corps allongé. Autrement dit, les points de fixation 44 et 45 sont situés au niveau, c'est-à-dire à distance nulle, des extrémités longitudinales respectives 42 et 43 selon l'axe longitudinal I. Ce mode de réalisation permet de limiter les risques de coincement des extrémités du corps allongé lors de sa récupération.

Dans une variante moins avantageuse, au moins un des deux points de fixation 44, 45 est situé à distance, selon l'axe longitudinal I, de l'extrémité longitudinale à proximité de laquelle il se situe.

Avantageusement, la distance séparant le premier point de fixation 44 de la première extrémité longitudinale 42 selon l'axe I est sensiblement la même que la distance séparant le deuxième point de fixation 45 de la deuxième extrémité longitudinale 43 selon l'axe I. Cela permet de favoriser l'orientation verticale de l'antenne d'émission longitudinale en remorquage. En variante, ces deux distances sont différentes mais c'est moins avantageux pour la stabilité du corps remorqué en remorquage.

En figures 1 à 4, la longueur des suspentes 6 et 7 et la position du déflecteur 60 sont définies de sorte que les suspentes 6 et 7 viennent en appui sur le déflecteur, lors de la première étape d'enroulement, lorsque le corps remorqué 4 est totalement immergé ou au moins partiellement immergé, par état de mer calme, lorsque la vitesse de remorquage est inférieure ou égale à la vitesse maximale de remorquage lors de la récupération. Cette caractéristique permet de stabiliser le corps remorqué, c'est-à-dire de commencer à limiter sa liberté de mouvement, avant sa sortie de l'eau. Cela permet de limiter les mouvements de l'objet allongé à sa sortie de l'eau, notamment par état de mer agitée, par rapport à une situation dans laquelle le corps remorqué 4 émergé et suspendu au câble tracteur 2 alors que le câble tracteur 2 est toujours en appui sur le déflecteur dévié par ce dernier. Dans cette dernière situation, un mouvement de rotation non maîtrisé de l'axe longitudinal du corps allongé autour du câble tracteur est induit par une mer agitée.

Cela est obtenu par un choix approprié de la position du déflecteur et de la longueur des suspentes en fonction de la vitesse maximale de remorquage.

En variante, la longueur des suspentes 6 et 7 et la position du déflecteur 60 sont définies de sorte que le câble tracteur 2 soit en appui sur le déflecteur 60 et dévié par le déflecteur 60, lors de la première étape d'enroulement, lorsque le corps remorqué 4 est émergé et suspendu à une portion du câble tracteur 2 s'étendant entre les suspentes et une zone du câble tracteur en appui sur le déflecteur 60.

Dans le premier mode de réalisation des figures 1 à 4, le corps remorqué 4 se situe en extrémité du dispositif sonar 301. Le dispositif sonar 301 est dépourvu d'un corps remorqué souple du type intégrant une antenne de réception et destinée à être tractée par le câble tracteur 2 via le corps remorqué 4.

Dans la réalisation des figures 5 à 7, le système sonar diffère de celui des figures 1 à 4, en ce qu'il comprend un dispositif sonar 1 selon un deuxième mode de réalisation qui diffère de celui des figures 1 à 4, en ce qu'il comprend un corps allongé souple 3 intégrant une antenne de réception 50 et destinée à être tractée par le câble tracteur 2 via le corps remorqué 4. L'antenne de réception 50 comprend une pluralité de transducteurs électroacoustiques 41 répartis le long du corps allongé souple 3.

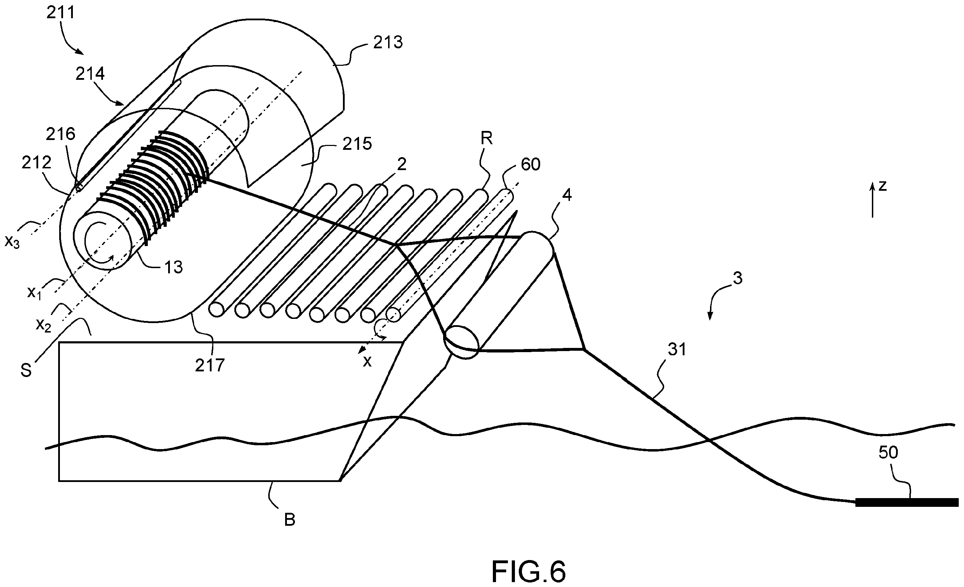

Le corps allongé souple 3 comprend éventuellement, comme visible en figures 6 à 7, un câble intermédiaire 31 de flottabilité neutre reliant l'antenne de réception 50 de flottabilité neutre au corps remorqué 4 et/ou un filin de queue 32 de flottabilité neutre relié au corps remorqué 4 par l'antenne de réception 50.

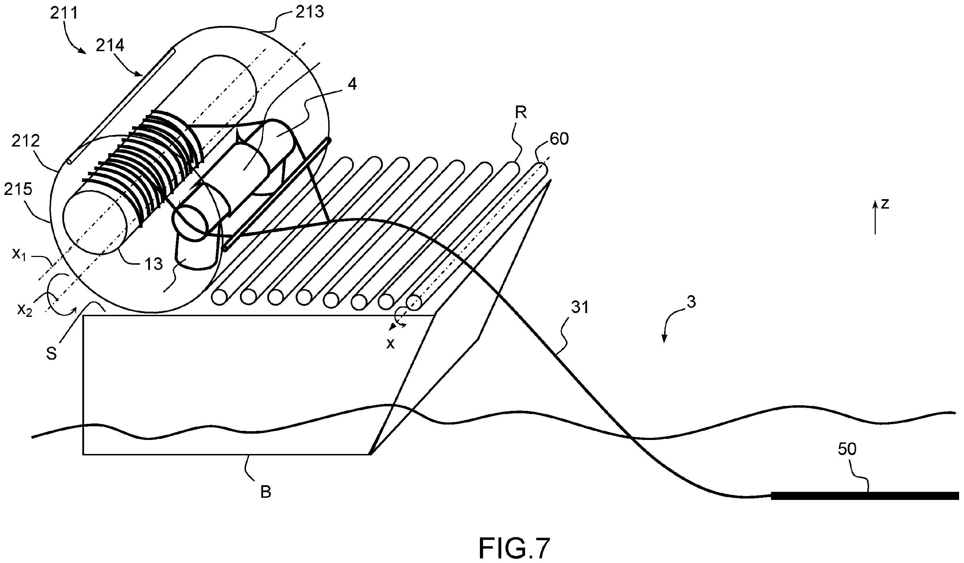

Comme visible en figures 6 et 7, le corps allongé souple 3 présente avantageusement une flottabilité sensiblement neutre de sorte à s'étendre horizontalement lorsque il est immergé et remorqué par le bâtiment de surface B.

Avantageusement, le corps allongé souple 3 est relié au câble tracteur 2 via le corps remorqué 4 qui est lui-même relié au corps allongé souple 3 de sorte que le corps allongé souple 3 exerce une traction sur le corps remorqué 4 en un troisième point de fixation 46 situé à proximité de la première extrémité longitudinale 42 du corps remorqué 4 et en un quatrième point de fixation 47 situé à proximité de la deuxième extrémité longitudinale 43 du corps remorqué 4. Cela permet un meilleur contrôle de l'orientation du corps remorqué lors de sa récupération à bord du bâtiment de surface B.

Le dispositif sonar 1 comprend, par exemple, une troisième suspente 8 comprenant une première extrémité 8a attachée au corps remorqué 4 en un troisième point de fixation 46 (qui situé au niveau de la première extrémité longitudinale 42, selon l'axe I, dans la réalisation non limitative de la figure 5) du corps remorqué 4 et une deuxième extrémité 8b reliée à une première extrémité 3a du corps allongé souple 3 et une quatrième suspente 9 comprenant une première extrémité 9a attachée au corps remorqué 4 en un quatrième point de fixation 47 (qui est situé au niveau de la deuxième extrémité longitudinale 43, selon l'axe I, dans la réalisation non limitative de la figure 5) du corps remorqué 4 et une deuxième extrémité 9b reliée à la première extrémité 3a du corps allongé souple 3. Le troisième point de fixation et le quatrième point de fixation sont solidaires l'un de l'autre.

Les variantes des positionnements du premier point de fixation et du deuxième point de fixation décrites en référence aux figures 1 à 4 sont applicables aux nouveaux points de fixation des figures 5 à 7. De même, les propriétés et l'agencement de la première suspente et de la deuxième suspente exposées plus haut ainsi que leurs variantes s'appliquent également à la troisième et à la quatrième suspente.

Sur les figures, les extrémités 8b et 9b sont fixes par rapport à l'extrémité 3a de l'élément allongé souple 3.

Avantageusement, le troisième point de fixation 46 de la première extrémité 8a de la troisième suspente 8 est situé à la même distance de la première extrémité longitudinale 42 du corps remorqué 4 que le premier point de fixation 44 de la deuxième extrémité 6b de la première suspente 6 et le quatrième point de fixation 47 de la première extrémité 9a de la quatrième suspente 9 est situé à la même distance de la deuxième extrémité longitudinale 43 du corps remorqué 4 que le deuxième point de fixation 45 de la deuxième extrémité 7b de la deuxième suspente 7.

En variante, ces distances ne sont pas toutes égales.

Les suspentes 8 et 9 peuvent présenter sensiblement la même longueur que les suspentes 6 et 7 ou une longueur différente.

Les suspentes 8 et 9 sont agencées de sorte à former un V lorsqu'elles sont tendues. Le V comprend un fond solidaire de la première extrémité 3a du corps allongé souple 3.

Le comportement du corps remorqué 4 diffère de celui des figures 1 à 4 en ce que lors d'une première étape d'enroulement lors de laquelle le premier tambour 13 est entraîné en rotation autour du premier axe x1 pour venir enrouler le câble tracteur 2 autour du premier tambour 13, la traction exercée par l'élément allongé 3 souple sur le corps remorqué 4 via la troisième suspente 8 et la quatrième suspente 9 limite l'inclinaison du corps remorqué 4 par rapport au plan vertical contenant le câble de traction 2.

Même si les deux suspentes 6 et 7 sont trop courtes, comme en figure 6, pour que la première suspente 6 soit en appui sur le déflecteur 60 et déviée par le déflecteur alors que le corps remorqué 4 est encore immergé, alors le basculement du corps remorqué 4 est limité par la traction exercée par le corps allongé souple 3 sur le corps remorqué 4 à sa sortie de l'eau. Ainsi, l'orientation du corps remorqué est mieux maîtrisée que dans le mode de réalisation des figures 1 à 4. Par ailleurs, la traction exercée par l'élément souple allongé 3 sur le corps remorqué l'éloigne de la poupe du bâtiment de surface. La présence du corps allongé souple 3 permet de limiter les risques de heurts avec le bâtiment de surface.

En variante, si les deux suspentes 6 et 7 sont suffisamment longues, comme en figures 1 à 4, pour que la première suspente 6 soit en appui sur le déflecteur 60 et déviée par le déflecteur alors que le corps remorqué 4 est encore immergé, alors la traction exercée par le corps allongé souple 3 sur le corps remorqué retient le corps remorqué et ralentit son basculement à sa sortie de l'eau jusqu'à ce que les deux suspentes viennent en appui sur le déflecteur 60 et soient déviées par le déflecteur 60. Ainsi, l'orientation du corps remorqué est encore mieux maîtrisée.

En figures 1 à 7, le corps remorqué 4 est rigide de sorte à ne pas être déformé lors de son utilisation, c'est-à-dire lors du remorquage du dispositif sonar immergé, lors de la récupération du dispositif sonar et lors de sa mise à l'eau.

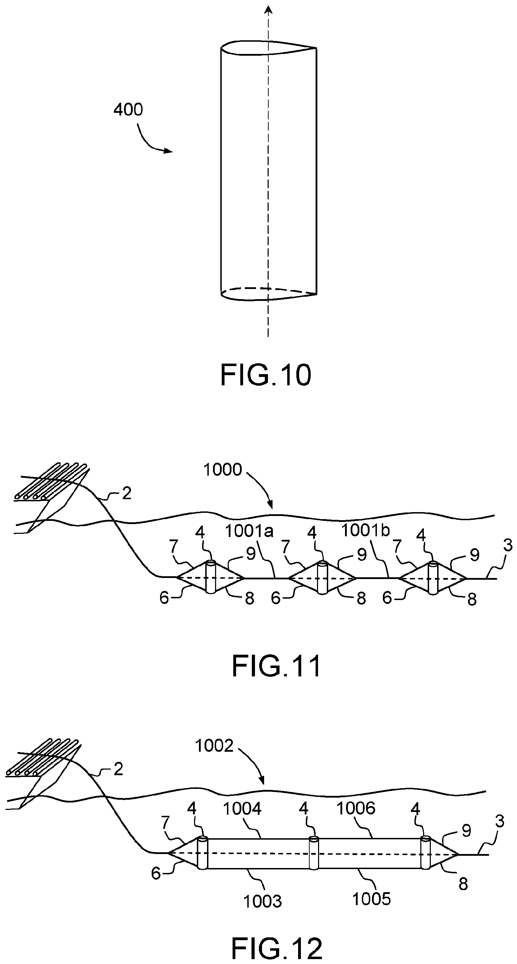

Le corps remorqué 4 peut être cylindrique ou le corps peut être profilé hydrodynamiquement. Il peut présenter globalement une forme de goutte d'eau dans un plan sensiblement perpendiculaire à l'axe I comme le corps remorqué 400 représenté en figure 10.

Le corps remorqué 4 peut être muni d'un revêtement hydrodynamique présentant, de façon non limitative en figure 5, une forme de voile 5. Ce revêtement n'a pas été représenté sur les figures 6 à 7. La voile 5 est, par exemple, installée entre les suspentes 8 et 9 reliant le corps remorqué 4 au corps allongé souple 3. Cette voile permet de limiter les vibrations induites par vortex. D'autres types de revêtements hydrodynamiques comme par exemple des gaines munies de cheveux ou de voiles gonflables peuvent être prévus.

En figures 1 à 4, le treuil 311 comprend uniquement le premier tambour 13 qui permet de stocker le dispositif sonar 301 des figures 1 à 4 en poursuivant la rotation du premier tambour dans le même sens jusqu'à ce que le corps remorqué 4 vienne en appui sur le premier tambour 13. Toutefois, ce treuil 311 n'est pas optimal pour stocker un dispositif sonar 1 tel que sur les figures 5 à 7 du type comprenant un corps allongé souple 3 en queue. En effet, il n'est pas optimal de venir enrouler le corps allongé souple 3. Un but de l'invention est de proposer un système sonar dont le dispositif de manutention permet d'assurer le stockage de ce type de dispositifs sonar et qui soit compact et peu lourd. De préférence, mais non nécessairement, le dispositif de manutention est configuré pour permettre de stocker ce dispositif sans nécessiter de déconnexion entre le corps remorqué et le corps allongé souple 3 et/ou de façon automatique.

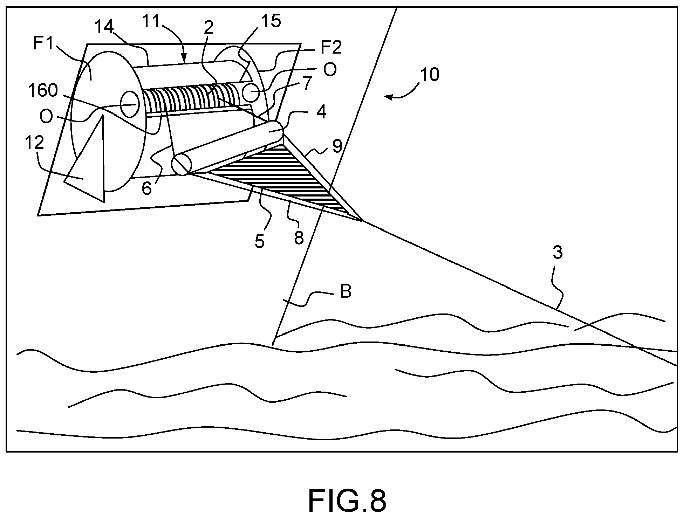

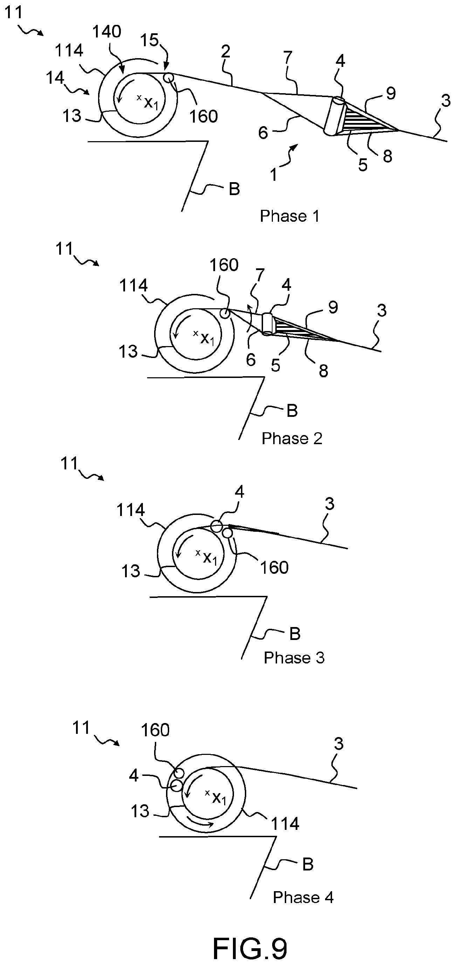

Un exemple de système sous-marin comprenant un dispositif de manutention 10 selon un autre mode de réalisation de l'invention est représenté schématiquement en perspective en figure 8 et en vues de côtés en figure 9 dans des phases 1 à 4 successives lors de la mise en oeuvre d'un procédé de stockage (ou de récupération) du dispositif sous-marin 1 au moyen du dispositif de manutention 10 pour venir stocker le dispositif sous-marin à bord du bâtiment de surface. Il est à noter que la figure 9 représente une phase située entre les phases 2 et 3 visibles en figure 3.

Le dispositif de manutention 10 comprend un treuil 11 comprenant un bâti 12 visible uniquement en figure 8 pour plus de clarté. Le bâti 12 est destiné à être fixé à une structure S du bâtiment de surface B.

Le treuil 11 comprend un premier tambour 13 apte à tourner par rapport au bâti 12 autour d'un premier axe de rotation x1. Ce treuil diffère de celui des figures 1 à 4 en ce qu'il comprend un deuxième tambour 14 entourant le premier tambour 13 et étant apte à tourner par rapport au bâti 12 autour d'un deuxième axe de rotation x2. Les tambours 13 et 14 sont concentriques dans la réalisation non limitative des figures 8 et 9 de sorte que l'axe x2 est l'axe x1.

Le deuxième tambour 14, entourant le premier tambour 13, présente un plus grand diamètre que le premier tambour 13.

Le treuil 11 est apte à être dans un état de découplage dans lequel le premier tambour 13 est apte à être entraîné en rotation autour de l'axe de rotation x1 par rapport au bâti 12 et est découplé du deuxième tambour 14 en rotation autour du premier axe de rotation x1 et autour du deuxième axe de rotation x2.

Cela permet de venir enrouler le câble tracteur 2 autour du premier tambour 13 lors d'une première étape d'enroulement lors de laquelle le premier tambour 13 est entraîné en rotation autour du premier axe x1.

Le deuxième tambour 14 est apte, au moins lorsque le treuil est dans l'état de découplage, à être dans un état ouvert, tel que représenté en figures 8 et 9 (phases 1 et 2), dans lequel le deuxième tambour 14 présente une ouverture de réception 15. L'ouverture de réception 15 est susceptible d'être traversée par le corps remorqué 4 pour pénétrer à l'intérieur du volume 140 délimité par les tambours 13 et 14. Ce volume entoure le premier tambour 13 et est entouré par le deuxième tambour 14.

Le deuxième tambour 14 délimite un volume interne sensiblement cylindrique dont le diamètre correspond au diamètre du deuxième tambour.

Le treuil 11 est apte à être dans un état de couplage dans lequel le premier tambour 13 et le deuxième tambour 14 sont couplés en rotation autour du deuxième axe de rotation x2.

De préférence, les tambours 13 et 14 sont solidaires en rotation autour du deuxième axe lorsque le treuil 11 est dans l'état de couplage.

Ainsi, en entraînant le deuxième tambour 14 en rotation par rapport au bâti 12, autour de l'axe x2, lorsque le treuil 11 est dans l'état de couplage, une fois que le corps remorqué 4 est stocké dans le volume 140, le corps allongé souple 3 vient s'enrouler autour du deuxième tambour 14.

Ainsi, le dispositif de manutention 10 selon l'invention permet de stocker, dans un volume limité et sur un unique treuil 11, un câble tracteur 2 et un sonar actif à antenne d'émission linéaire 3, 6. Le dispositif de manutention selon l'invention permet de stocker le câble tracteur 2 autour du premier tambour 13, l'antenne linéaire d'émission dans le volume délimité par le deuxième tambour et l'antenne linéaire de réception autour du deuxième tambour.

Ce dispositif de manutention est moins coûteux, moins volumineux et moins lourd qu'un dispositif qui utiliserait des treuils séparés pour récupérer d'une part le câble tracteur et d'autre part le corps allongé souple.

De façon générale, cette configuration est particulièrement intéressante pour le stockage de dispositifs sous-marins selon l'invention comprenant un corps remorqué 4 allongé destiné à être stocké sans se déformer, tel que le dispositif sonar selon l'invention.

En effet, la forme d'un tambour 14 permet de ménager une ouverture de réception 15 présentant une forme d'une fente s'étendant longitudinalement selon l'axe x1 comme représenté en figures 8 et 9, qu'un corps remorqué 4 allongé peut traverser avec son axe longitudinal sensiblement parallèle à l'axe x1, lors de la première étape d'enroulement, sans subir de déformation. Le dispositif permet ainsi de réaliser des corps remorqués à antenne d'émission linéaire relativement lourds et longs et non déformables.

Avantageusement (mais non nécessairement), comme visible en figures 8 et 9 l'ouverture de réception 15 s'étend sensiblement sur toute la longueur du deuxième tambour 14 selon le premier axe de rotation x1. En variante, l'ouverture de réception 15 s'étend sur une partie de la longueur du deuxième tambour 14 selon le premier axe de rotation x1.

Avantageusement, le deuxième tambour 14 est apte à être positionné, et de préférence immobilisé, dans une position angulaire de réception, autour du deuxième axe x2, dans laquelle l'ouverture de réception 15 est apte à être traversée par le câble tracteur 2 et/ou le corps remorqué 4, de préférence, mais non nécessairement, lors de la première étape d'enroulement, comme visible en figures 8 et 9.

Lorsque le câble tracteur et le corps remorqué 4 traversent l'ouverture sous l'effet de la rotation du premier tambour 13, le câble 2 et le corps remorqué pénétrant dans le volume 140 au travers de la même ouverture de réception 15, le stockage du dispositif sous-marin ne nécessite pas d'opération manuelle ou automatique pour déconnecter le corps remorqué et le câble tracteur.

L'ouverture de réception doit alors être dimensionnée pour que le corps remorqué puisse la traverser lors la première étape d'enroulement en fonction de l'orientation dans laquelle il se présente par rapport à l'ouverture. Elle doit notamment présenter une longueur plus importante, selon l'axe x1, que la longueur du corps remorqué 4 selon l'axe longitudinal I.

Avantageusement, si la première étape d'enroulement se poursuit, le corps remorqué 4 vient en appui sur le premier tambour 13, sous l'effet de l'entraînement du premier tambour en rotation autour de l'axe x1.

Le procédé de manutention d'un dispositif sous-marin est ainsi facilement automatisable ce qui permet d'éviter l'intervention d'un opérateur humain et les risques associés et permet le stockage du dispositif sous-marin à bord d'un USV.

En variante, l'étape d'insertion du corps remorqué 4 dans le volume 140 en passant au travers de l'ouverture de réception 15 peut être réalisée ultérieurement à la première étape d'enroulement, par exemple, par un opérateur humain ou un outillage.

Avantageusement, un même plan perpendiculaire à l'axe x1 est situé à égale distance des deux extrémités longitudinales du premier tambour 13 et à égale distance des deux extrémités longitudinales du deuxième tambour 14.

Avantageusement, le premier tambour 13 et le deuxième tambour 14 présentent la même longueur selon l'axe x1. Le deuxième tambour 14 entoure le premier tambour sur toute la longueur du premier tambour 13 selon l'axe x1. En variante, les tambours 13 et 14 sont décalés l'un par rapport à l'autre selon l'axe x1.

En variante, le deuxième tambour 14 est plus long que le premier tambour 13 selon l'axe x1 ce qui permet d'enrouler une plus grande longueur de corps allongé souple 3, ou inversement, le deuxième tambour 14 est moins long que le premier tambour 13 selon l'axe x1, ce qui permet d'enrouler une plus grande longueur de câble tracteur 2.

Avantageusement, le corps remorqué 4 est apte à pénétrer dans le volume 140 au travers de l'ouverture de réception 15 pour être stocké dans le volume 140 sans sortir radialement (par rapport à l'axe x2) du volume 140. Autrement dit, le corps remorqué 4 est à l'intérieur du cylindre, dont le diamètre est le diamètre du deuxième tambour, formé autour de x2 sur toute la longueur du deuxième tambour selon l'axe x1. L'enroulement du corps allongé souple 3 autour du deuxième tambour 14 après stockage du corps remorqué 4 dans le volume 140 n'est alors pas gêné par le corps remorqué 4.

Avantageusement, le corps remorqué 4 est apte à pénétrer dans le volume 140 au travers de l'ouverture de réception 15 pour être stocké dans le volume 140 sans sortir radialement (par rapport à l'axe x2) du volume 140 une fois que le câble tracteur est enroulé autour du premier tambour 13.

En figures 7 et 9, le corps remorqué 4 est apte à être entièrement stocké dans le volume 140. En variante, le corps remorqué 4 pourrait dépasser du volume 140 selon l'axe x2, par exemple, lorsque le premier tambour 13 est plus long que le deuxième tambour 14.

L'invention se rapporte également à un procédé de récupération et de mise à l'eau du dispositif sous-marin, aptes à être mis en oeuvre par le dispositif de manutention selon l'invention. Le dispositif de manutention peut être configuré pour mettre en oeuvre ces procédés lorsqu'une condition de récupération ou de mise à l'eau est vérifiée, par exemple, lorsqu'un dispositif de commande du dispositif de manutention reçoit un ordre de stockage ou respectivement de déploiement.

Le procédé de récupération du dispositif de manutention 10, initialement déployé et relié au tambour 13 via le câble tracteur 2, comprend :
- une première étape d'enroulement lors de laquelle le treuil 11 est dans l'état de découplage, le premier tambour 13 étant entraîné en rotation autour de l'axe de rotation x1, par rapport au bâti 12 de sorte à venir enrouler le câble tracteur 2 autour du premier tambour 13 (phases 1 et 2 de la figure 9), le câble tracteur 2 passant au travers de l'ouverture de réception 15 ou, dans une variante moins avantageuse, au travers d'une autre ouverture ménagée dans le deuxième tambour 14,
- une étape d'insertion du corps remorqué 4 dans le volume 140 (phase 3 de la figure 9), au travers de l'ouverture de réception 15,
- une deuxième étape d'enroulement (phase 4 de la figure 9) lors de laquelle le treuil 11 est dans l'état de couplage, le deuxième tambour 14 étant entraîné en rotation autour du deuxième axe de rotation x2 de sorte que l'élément linéaire souple 3 vienne s'enrouler autour du deuxième tambour 14.

Dans un premier cas, lorsque le treuil 11 est dans l'état de découplage, le premier tambour 13 étant entraîné en rotation autour de l'axe de rotation x1, le câble tracteur 2 vient s'enrouler autour du premier tambour 13 (phases 1 et 2 de la figure 9) en passant à travers l'ouverture de réception 15 puis le corps remorqué 4 passe à travers l'ouverture de réception 15, sous l'effet de l'entraînement du premier tambour 13 en rotation autour de l'axe de rotation x1 (phase 3 de la figure 9), pour pénétrer dans le volume 140 délimité par le deuxième tambour 14.

A cet effet, le deuxième tambour 14 est apte à être positionné, et de préférence immobilisé, dans une position angulaire dite de réception, autour de l'axe x2, dans laquelle l'ouverture de réception 15 est susceptible d'être traversée par le câble tracteur 2 et le corps remorqué 4, lors de la première étape d'enroulement. L'ouverture de réception 15 doit alors être dimensionnée pour que le corps remorqué puisse la traverser lors la première étape d'enroulement en fonction de l'orientation dans laquelle il se présente par rapport à l'ouverture.

Avantageusement, si la première étape d'enroulement se poursuit, le corps remorqué 4 vient en appui sur le premier tambour 13, sous l'effet de l'entraînement du premier tambour 13 en rotation autour de l'axe x1.

Lors de la deuxième étape d'enroulement, le deuxième tambour 14 est entraîné en rotation autour de l'axe x2 dans le même sens que le sens de rotation du premier tambour 13 pendant la première étape d'enroulement.

Le procédé de récupération du dispositif sous-marin initialement déployé est ainsi facilement automatisable ce qui permet d'éviter l'intervention d'un opérateur humain et les risques associés et permet le stockage du dispositif sous-marin à bord d'un USV.

Dans un deuxième cas, le corps remorqué 4 ne pénètre pas dans le volume 140 au travers de l'ouverture de réception 15 sous l'effet de la rotation du premier tambour 13 autour de l'axe x1. L'étape d'insertion du corps remorqué 4 dans le volume 140 en passant au travers de l'ouverture de réception 15 peut être réalisée ultérieurement à la première étape d'enroulement, par exemple, par un opérateur humain ou un outillage.

Le procédé comprend avantageusement les étapes suivantes :
- découpler le premier tambour 13 du deuxième tambour 14 en rotation des axes x1 et x2 par rapport au bâti 12 pour mettre le treuil 11 dans l'état de découplage, cette étape est mise en oeuvre par des moyens de couplage/découplage du treuil 11,
- immobiliser le deuxième tambour 14 à l'état ouvert, en rotation par rapport au bâti 12 autour de son axe de rotation x2 dans la position angulaire de réception, cette étape est mise en oeuvre par des moyens d'immobilisation, comme par exemple un frein, un doigt de centrage ou un engrenage.

Le procédé comprend également, une fois que le corps est inséré dans volume 140, une étape de couplage, du premier tambour 13 et du deuxième tambour 14 en rotation autour du deuxième axe de rotation x2 par rapport au bâti 12 pour mettre le treuil 11 dans l'état de couplage. Cette étape est mise en oeuvre par les moyens de couplage/découplage.

Dans la réalisation des figures 8 et 9, les tambours 13 et 14 concentriques. Ce mode de réalisation permet de proposer un dispositif de manutention simple et léger. Les deux tambours peuvent, par exemple, être entraînés en rotation par rapport au bâti, lorsque le treuil est dans l'état de découplage et dans l'état de couplage, par un même arbre lui-même entraîné en rotation par un unique moteur. Les moyens de couplage/découplage peuvent être réalisés de façon très simple en montant le premier tambour solidaire de l'arbre, en montant le deuxième tambour en liaison pivot sur le premier arbre et en prévoyant un coupleur permettant de rendre le deuxième tambour alternativement solidaire de l'arbre et libre en rotation autour de l'axe de rotation x1 par rapport à l'arbre.

Les moyens couplage/découplage, tout comme les premiers moyens de couplage/découplage qui seront décrits ultérieurement, sont, par exemple, des moyens classiques pour l'homme du métier qui sont, par exemple, réalisés sous forme d'un embrayage ou bien basés sur un frein couplé à une mâchoire solidaire d'une des parties ou bien sur un moteur couplé à une couronne dentée ou encore un pion de liaison.

Le dispositif de manutention à tambours concentriques est particulièrement adapté au stockage d'un dispositif sous-marin 1 présentant un corps remorqué 4, par exemple une antenne linéaire d'émission, réalisé sous la forme d'un objet cylindrique à section circulaire ou non, par exemple à section sensiblement en forme de goutte d'eau. Le corps remorqué cylindrique 4 peut venir en appui sur un enroulement du câble tracteur 2, préalablement réalisé autour du premier tambour 13, sur chaque spire d'une couche de cet enroulement, ce qui est favorable à une bonne stabilité du corps remorqué 4 sur le premier tambour 13.

Lorsque, lors de la première étape d'enroulement, le corps remorqué cylindrique vient en appui sur le premier tambour 13, sous l'effet de la traction exercée sur le corps remorqué cylindrique, par le câble 2 ou par un système d'attache reliant le corps remorqué au câble, la traction exercée par le câble ou le système d'attache maintient le corps en appui sur le premier tambour 13 sans qu'il ne soit nécessaire de prévoir des moyens de fixation pour fixer le corps remorqué 4 au premier tambour 13. Cette traction est maintenue lors de la deuxième étape d'enroulement. Cela évite une intervention humaine pour assurer cette fixation ou des moyens coûteux pour protéger le corps d'éventuels chocs qui pourraient être dus à une déstabilisation du corps. Par ailleurs, ce type de corps remorqué peut être stocké dans volume compact formé autour du tambour 13.

Dans le mode de réalisation représenté en figures 5 à 7, l'axe x1 est distant de l'axe x2. Ce mode de réalisation permet de stocker, dans le volume délimité par le deuxième tambour 214 un objet de dimensions importantes dans le plan perpendiculaire à l'axe x1 sans avoir à augmenter le diamètre du deuxième tambour 214 de façon significative et/ou de stocker un corps de forme complexe.

Les axes sont, par exemple, écartés selon un axe horizontal, par état de mer calme, et perpendiculaire à l'axe x1.

Le premier tambour 13 est, par exemple, monté rotatif autour d'un arbre d'axe x1 fixé au deuxième tambour 214, par exemple à une coque 212 du deuxième tambour 214. La coque 212 sera décrite ultérieurement.

Les moyens de couplage/découplage peuvent comprendre des premiers moyens de couplage/découplage permettant alternativement de solidariser et de désolidariser le premier tambour 13 de l'arbre sur lequel il est monté et des moyens d'immobilisation du deuxième tambour, autour de l'axe x2 par rapport au bâti 12 permettant alternativement de solidariser et de désolidariser le deuxième tambour du bâti en rotation autour de l'axe x2. L'état de découplage est obtenu par découplage du premier tambour 13 avec l'arbre autour de l'axe x1 et par immobilisation du deuxième tambour 214 autour de l'axe x2 par rapport au bâti 12. L'état de couplage est obtenu en couplant le premier tambour 13 à l'arbre. Un premier moteur est prévu pour permettre d'entraîner le premier tambour 13 en rotation autour de l'axe x1 par rapport au bâti. Un deuxième moteur est prévu pour permettre d'entraîner le deuxième tambour 214 en rotation autour de l'axe x2 par rapport au bâti.

Dans la réalisation des figures 8 et 9, le deuxième tambour 14 présente, comme visible en figure 9, une coque 114 présentant une forme d'une coque globalement cylindrique dans laquelle est ménagée l'ouverture de réception 15.

Le tambour 14 des figures 8 et 9 est apte à être uniquement à l'état ouvert. Le deuxième tambour 14 est configuré de sorte que l'enroulement d'un élément souple allongé 3 autour du deuxième tambour 14 est possible lorsque le deuxième tambour 14 est à l'état ouvert.

Avantageusement, l'ouverture de réception 115 s'étend sur un angle inférieur ou égal à 20° et, de préférence, inférieur ou égal à 15° pour permettre un enroulement correct du corps allongé souple 3 autour du deuxième tambour 14.

En variante, le treuil 11 des figures 8 et 9 pourrait être apte à être alternativement dans l'état ouvert et dans un état fermé dans lequel l'ouverture de réception est au moins partiellement fermée comme représenté en figures 5 à 7. L'enroulement de l'élément allongé souple est alors possible uniquement à l'état fermé ou à l'état fermé et à l'état ouvert.

Dans la réalisation des figures 5 à 7, le dispositif de manutention 210 diffère du dispositif de manutention des figures 8 et 9, notamment par le treuil 211 qui comprend un deuxième tambour 214 qui se distingue du deuxième tambour 14 des figures 8 et 9, en ce qu'il est apte à être alternativement dans un état ouvert, tel que représenté en figure 5 et 6, dans lequel il présente une ouverture de réception 215 au travers de laquelle le corps remorqué 4 peut passer pour pénétrer à l'intérieur du volume 240 délimité par le deuxième tambour 214 et le premier tambour 13 et entourant le premier tambour 13, et dans un état fermé, tel que représenté en figure 7, dans lequel l'ouverture de réception 215 est au moins partiellement fermée. Cela pourrait également être le cas pour des tambours coaxiaux, tout comme les caractéristiques plus précises de dispositif et de procédé décrites ci-après, prises seules ou en combinaison. Ce type de configuration permet de ménager une grande ouverture de réception dans le tambour et ainsi de recevoir, à l'intérieur du volume délimité par le deuxième tambour 214, des corps remorqués de grande taille, par exemple dans un plan perpendiculaire à l'axe x2. Par ailleurs, une grande ouverture laisse plus de place à une éventuelle manipulation du corps remorqué, par une machine ou un opérateur.

Le deuxième tambour 214 comprend un capot mobile 213 par rapport à une première partie 212 du deuxième tambour 214 et apte à être dans une première position (figures 5 et 6) dans laquelle le capot 213 ouvre le deuxième tambour 214 de sorte qu'il comprenne l'ouverture de réception 215 et dans une deuxième position (figure 7) dans laquelle le capot 213 ferme sensiblement l'ouverture de réception 15 de sorte que le deuxième tambour 214 présente sensiblement une forme cylindrique. Une fente résiduelle laisse avantageusement passer une zone de liaison entre le corps remorqué et le corps allongé souple 3 ou le corps allongé souple 3.

Dans l'exemple non limitatif des figures 5 à 7, le deuxième tambour 214 comprend une coque 212 présentant sensiblement une forme d'une portion angulaire d'un cylindre formé autour de l'axe x2. La coque 212 s'étend angulairement autour de l'axe x2, depuis un premier bord axial 216 sensiblement parallèle à l'axe x2 jusqu'à un deuxième bord axial 217 sensiblement parallèle à l'axe x2. Le capot 213 présente une forme sensiblement complémentaire de la coque 212 et est monté pivotant par rapport à la coque 212 autour d'un axe de rotation du capot x3 parallèle à l'axe x2 à proximité du bord 216 de sorte que le capot 213 est apte à passer de la première position représentée en figure 5 à la deuxième position représentée en figure 7 par une rotation par rapport à la première partie autour de l'axe x3.

Le procédé de stockage (ou de récupération) comprend une étape d'ouverture, mise en oeuvre par des moyens d'ouverture ou par un opérateur, pour faire passer le deuxième tambour de l'état fermé à l'état ouvert. Cette étape d'ouverture peut être est mise en oeuvre avant la première étape d'enroulement ou bien pendant ou après la première étape d'enroulement mais avant l'insertion du corps remorqué. Le procédé comprend, après l'étape d'insertion du corps remorqué et avant la deuxième étape d'enroulement, une étape de fermeture du deuxième tambour 214 pour permettre l'enroulement de l'élément allongé 3 autour du deuxième tambour.

Dans la réalisation des figures 5 à 7, l'étape d'insertion du corps remorqué 4 dans le volume 140 en passant au travers de l'ouverture de réception 15 est réalisée ultérieurement à la première étape d'enroulement, par exemple, par un opérateur humain ou un outillage. En variante, l'étape est réalisée, comme en figures 8 et 9, lors de la première étape d'enroulement sous l'effet de la rotation du premier tambour autour de l'axe x1.

Le dispositif de manutention comprend avantageusement des moyens de fixation SF, SP, tels que représentés en figure 7, du corps remorqué 4 au deuxième tambour 214 et, plus particulièrement, à la coque 212, configurés pour rendre le corps remorqué solidaire du deuxième tambour 14 en rotation autour de l'axe x2. Ces moyens de fixation comprennent, par exemple, un support SP destiné à supporter le corps remorqué 4 et fixe par rapport à la coque 212 ou par rapport au capot et des moyens de fixation SF du corps remorqué 4 au support SP. Ce type de moyens peut également être prévu lorsque les tambours sont coaxiaux.

Le deuxième tambour 214 apte à être à l'état ouvert et fermé est, par exemple, configuré, comme sur les figures 5 et 6, de sorte que l'enroulement d'un corps allongé souple, par exemple du corps 3, autour du deuxième tambour 214 est impossible dans l'état ouvert et possible dans l'état fermé.

En variante, le deuxième tambour est configuré de sorte que l'enroulement d'un câble autour du deuxième tambour est possible à l'état ouvert et à l'état fermé. Le capot est, par exemple, du type volet tournant, présentant, par exemple, une forme d'une portion de cylindre d'un diamètre très légèrement inférieur au diamètre du deuxième tambour et apte à pivoter autour de l'axe x2 pour venir fermer ou ouvrir le deuxième tambour.

Comme représenté en figure 8, le treuil peut comprendre deux flasques F1, F2 délimitant les tambours selon l'axe x1. Avantageusement, au moins une flasque présente une ouverture O permettant à un opérateur d'accéder au volume 140 de sorte à permettre la maintenance du corps remorqué 4 stocké dans le volume 140. Ce type de moyens peut également être prévu lorsque les tambours sont coaxiaux.

En figures 1 à 7, le dispositif de manutention comprend un déflecteur 60 disposé en amont du premier tambour 13, vu du corps remorqué 4 la première suspente 6 et de la deuxième suspente 7 initialement immergées, lors de la première étape d'enroulement. Autrement dit, les suspentes sont aptes à venir en appui sur le déflecteur 60 avant de venir s'enrouler autour du premier tambour 13 lors de la première étape d'enroulement.

Plus particulièrement, le déflecteur 60 est disposé à proximité de la poupe PO du bâtiment de surface B de façon que le corps remorqué 4 présente l'orientation de manutention (x sensiblement parallèle à I) avant son arrivée à bord du bâtiment de surface B. Le déflecteur 60 est, par exemple, le premier élément du dispositif de manutention et/ou du bâtiment de surface, rencontré par les suspentes lors d'un procédé de récupération/stockage du dispositif sonar initialement déployé et remorqué par le bâtiment de surface. Cela permet de limiter les risques de heurts entre le corps remorqué 4 et la poupe du navire. Cela permet également d'éviter la conception ouvertures de grandes dimensions à l'arrière du bâtiment porteur pour permettre de récupérer une antenne linéaire d'émission et d'éviter de créer une tranchée (« recess » en terminologie anglo-saxonne) dans le pont principal du bâtiment de surface afin de pouvoir stocker une antenne linéaire d'émission trop haute pour être logée entre le pont principal et le pont supérieur.

Le déflecteur 160 du dispositif de manutention des figures 8 et 9 diffère de celui des figures 1 à 7 en ce qu'il est plus proche du premier tambour 13 et, plus particulièrement, de l'ouverture 15 de sorte que le corps remorqué traverse l'ouverture 15 sensiblement dans l'orientation de manutention (I sensiblement parallèle à l'axe du déflecteur 160 selon lequel le déflecteur 160 s'étend longitudinalement). Cela permet de limiter les risques de heurts entre le corps remorqué 4 et le deuxième tambour 14 lorsqu'il traverse l'ouverture de réception 15 et ainsi de limiter les risques du coincement à son arrivée sur le tambour. Cela permet également, lorsque l'axe du déflecteur est sensiblement parallèle à l'axe x1, d'amener naturellement et sans intervention d'un outillage ou d'un opérateur, le corps remorqué 4 dans une orientation favorable à la traversée de l'ouverture de réception 15 et à son stockage stable et aisé sur le premier tambour 13 (axe I sensiblement parallèle à l'axe x1) le corps remorqué 4 pouvant être maintenu en appui sur le premier tambour 13 sur toute sa longueur. Dans l'exemple non limitatif des figures 8 et 9, le déflecteur 160 est disposé en amont du tambour 13 et monté sur le deuxième tambour 14 de sorte à délimiter l'ouverture de réception 15.

De façon plus générale, un déflecteur 160 peut être disposé de sorte que le corps remorqué 4 traverse l'ouverture 15 sensiblement dans l'orientation de manutention et/ou arrive en appui sur le tambour 13 sensiblement dans l'orientation de manutention.

Ce type de déflecteur 160 est disposé entre la poupe du bâtiment de surface et le premier tambour 13 par exemple, entre un déflecteur 60 et le premier tambour 13. Ce déflecteur 160 fait, par exemple, partie du treuil en étant, par exemple, disposé en amont du premier tambour 13, par exemple en amont de l'ouverture de réception 15 (lors de la première étape d'enroulement), ou au niveau de l'ouverture de réception 15.

Différents déflecteurs occupant différentes positions décrites ci-dessus peuvent, en variante, être prévus dans un même dispositif de manutention.

Il est à noter que le premier tambour 13 constitue également un déflecteur permettant d'amener le corps remorqué 4 sensiblement dans l'orientation de manutention sur le premier tambour 13. Dans une variante non représentée, le dispositif de manutention comprend un seul déflecteur formé par le premier tambour 13.

L'invention se rapporte à un procédé de récupération du dispositif sonar depuis un bâtiment de surface comprenant une première étape d'enroulement lors de laquelle le premier tambour 13 est entraîné en rotation autour du premier axe x1 de sorte que le câble tracteur 2 vienne s'enrouler autour du premier tambour 13, et de façon que la première suspente 6 et la deuxième suspente 7 viennent en appui sur le déflecteur 60 pour être déviées par le déflecteur de sorte que l'axe longitudinal du corps remorqué 4 soit orienté sensiblement parallèlement à l'axe du déflecteur x, lorsque le corps remorqué 4 est totalement émergé et suspendu à la première suspente 6 et à la deuxième suspente 7. L'invention se rapporte à un système sonar configuré pour mettre en oeuvre cette étape lors d'un procédé de récupération qui est par exemple mis en oeuvre lorsqu'une condition de récupération est respectée. Le système sonar comprend alors des moyens de commande pour commander le dispositif de manutention de sorte à mettre en oeuvre le procédé.

L'invention se rapporte à un procédé de mise à l'eau du dispositif sonar depuis un bâtiment de surface comprenant une première étape de déroulement lors de laquelle le premier tambour 13 est entraîné en rotation autour du premier axe x1 de sorte que le câble tracteur 2 vienne se dérouler du premier tambour 13, et de façon que la première suspente 6 et la deuxième suspente 7 viennent en appui sur le déflecteur 60 pour être déviées par le déflecteur de sorte que l'axe longitudinal du corps remorqué 4 soit orienté sensiblement parallèlement à l'axe du déflecteur x, lorsque le corps remorqué 4 est totalement émergé et suspendu à la première suspente 6 et à la deuxième suspente 7. L'invention se rapporte à un système sonar configuré pour mettre en oeuvre cette étape lors d'un procédé de mise à l'eau qui est par exemple mis en oeuvre lorsqu'une condition de récupération est respectée. Le système sonar comprend alors un dispositif de commande pour commander le dispositif de manutention de sorte à mettre en oeuvre le procédé.

Dans les exemples représentés sur les figures, le treuil comprend un unique deuxième tambour 14. Dans une variante plus complexe, le treuil comprend un ensemble de plusieurs deuxièmes tambours tels que définis précédemment. Ces deuxièmes tambours présentent des diamètres différents de sorte à s'entourer les uns les autres. Chaque deuxième tambour 14 présente une ouverture donnant accès au volume situé entre ce deuxième tambour et le tambour de diamètre directement inférieur. Cela permet, par exemple, de récupérer différents corps remorqués dans le volume délimité entre chaque deuxième tambour et le tambour de diamètre directement inférieur ou de pouvoir enrouler des portions d'éléments allongés souples de différentes souplesses sur des tambours de diamètres différents.

Tous les tambours peuvent être couplés en rotation et chaque tambour peut être découplé en rotation des autres tambours.

Dans les exemples représentés sur les figures 1 à 9, le dispositif sous-marin comprend un unique corps remorqué.

En variante, le dispositif sous-marin comprend un ensemble de plusieurs corps remorqués. Le dispositif de manutention peut alors comprendre un ou plusieurs deuxièmes tambours.

Chaque corps remorqué est avantageusement allongé selon un axe longitudinal et présentent la même longueur mais ce n'est pas obligatoire.

Le dispositif sous-marin comprend, par exemple, un ensemble de plusieurs corps remorqués 4. Les corps remorqués 4 sont reliés les uns aux autres, au câble tracteur 2 et à l'élément allongé souple 3 de sorte à être répartis le long d'une ligne de remorquage courbe définie par le câble tracteur et l'élément allongé souple lorsque le dispositif sous-marin est remorqué par le bâtiment de surface, l'ensemble de corps remorqués étant répartis le long de la ligne de remorquage.

Un exemple de ce type de dispositif est représenté en figure 11. Le dispositif sous-marin 1000 comprend plusieurs corps remorqués 4 répartis le long de la ligne de remorquage définie par le câble 2 et le corps allongé souple 3 et tracée en traits pointillés entre les deux. Les corps remorqués 4 sont reliés les uns aux autres par des lignes intermédiaires 1001a, 1001b.

Le système est, par exemple, configuré de sorte à stocker ou permettre de plusieurs corps remorqués en appui sur le premier tambour 13 ou, de façon plus générale, entre le premier tambour 13 et le deuxième tambour 14 ou de sorte à stocker ou permettre de stocker différents corps remorqués dans les volumes successifs définis entre les tambours adjacents successifs ou en appui sur des tambours successifs.

Dans l'exemple de la figure 11, les corps remorqués 4 sont reliés deux à deux par des lignes intermédiaires 1001a, 1001b via des suspentes. Chaque corps intermédiaire est fixé à une première et une deuxième suspente 6, 7 le reliant au câble tracteur et à une troisième et une quatrième suspente 8, 9 le reliant au corps allongé souple.

En variante, dans le dispositif sous-marin 1002 de la figure 12, les corps remorqués 4 sont reliés deux à deux par des ensembles de lignes intermédiaires 1003,1004 et 1005, 1006. Un des corps remorqués est fixé à une première et une deuxième suspente 6, 7 le reliant au câble. Ce corps remorqué est relié au corps remorqué adjacent par plusieurs lignes intermédiaires 1003,1004, sensiblement parallèles en remorquage. Ce corps remorqué est lui-même relié au dernier corps remorqué adjacent par des lignes intermédiaires 1005,1006. Le dernier corps remorqué est fixé à une troisième et une quatrième suspente 8, 9 le reliant au corps allongé souple.

Chaque ligne intermédiaire est un élément allongé souple pouvant être réalisés sous la forme d'un câble, par exemple un câble électrotracteur. Chaque ligne intermédiaire peut comprendre au moins transducteur électroacoustique. Elle peut intégrer une antenne acoustique, par exemple, une antenne de réception acoustique.

Le dispositif de commande pour commander le dispositif de manutention (moyens de couplage/découplage, premiers moyens de couplage/découplage, moyens d'entraînement, moyens d'immobilisation, moyens d'ouverture) peut comprendre un ou plusieurs circuits électroniques dédiés ou un circuit à usage général. Chaque circuit électronique peut comprendre une machine de calcul reprogrammable (un processeur ou un micro contrôleur par exemple) et/ ou un calculateur exécutant un programme comprenant une séquence d'instructions et/ou une machine de calcul dédiée (par exemple un ensemble de portes logiques comme un FPGA un DSP ou un ASIC, ou tout autre module matériel).

## Revendications

1. Système sonar comprenant un dispositif sonar (1 ; 301) destiné à être remorqué par un bâtiment de surface (B) et comprenant un câble tracteur (2) et un ensemble d'au moins un dispositif tracté, comprenant un corps remorqué (4), destiné à être tracté par le bâtiment de surface (B) via le câble tracteur (2), le corps remorqué (4) étant allongé selon un axe longitudinal (I) depuis une première extrémité longitudinale (42) du corps remorqué jusqu'à une deuxième extrémité longitudinale (43) du corps remorqué (4), le corps remorqué (4) intégrant une première antenne acoustique linéaire (40) comprenant une pluralité de transducteurs électroacoustiques (41) sensiblement alignés selon l'axe longitudinal (I), le dispositif tracté étant configuré et relié au câble de tracteur de sorte que le corps remorqué (4) soit apte à présenter, lorsqu'il est remorqué et totalement immergé, une orientation dans laquelle l'axe longitudinal (I) s'étend sensiblement selon un axe vertical défini par la force de gravité, au moins un corps remorqué de l'ensemble d'au moins un dispositif tracté étant relié au câble tracteur (2) par un première suspente (6) et une deuxième suspente (7) présentant sensiblement la même longueur, une première extrémité (6a) de la première suspente (6) et une première extrémité (7a) de la deuxième suspente (7) étant reliées au câble tracteur et une deuxième extrémité (6b) de la première suspente (6) étant attachée au corps remorqué (4) en un point de fixation (44) du corps remorqué (4) situé à proximité de la première extrémité longitudinale (42) et une deuxième extrémité (7b) de la deuxième suspente (7) étant attachée au corps remorqué (4) en un deuxième point de fixation (45) solidaire du premier point de fixation (44) et situé à proximité de la deuxième extrémité longitudinale (43), le système sonar comprenant en outre un dispositif de manutention (10; 210 ; 310) destiné à mettre à l'eau et à récupérer le dispositif sonar (1 ; 301) depuis le bâtiment de surface, le dispositif de manutention (10 ; 210 ; 310) comprenant un treuil (11 ; 311) comprenant un premier tambour (13) apte à tourner autour d'un premier axe de rotation (x1) pour enrouler le câble tracteur (2) autour du premier tambour (13), **caractérisé en ce que** le dispositif de manutention (1 ; 301) comprend un ensemble d'au moins un déflecteur (60) convexe et présentant globalement une forme d'une portion d'un cylindre s'étendant longitudinalement selon un axe du déflecteur (x), le déflecteur (60) étant disposé de façon à s'étendre sensiblement horizontalement, par état de mer calme, et sensiblement perpendiculairement à un plan vertical sensiblement parallèle à un axe de traction exercé sur le câble de traction (2) par le dispositif de manutention (310 ; 210) lors d'une première étape d'enroulement lors de laquelle le premier tambour (13) est entraîné en rotation autour du premier axe (x1) de sorte que le câble tracteur (2) vienne s'enrouler autour du premier tambour (13) et de façon que la première suspente (6) et la deuxième suspente (7) viennent en appui sur le déflecteur (60) pour être déviées par le déflecteur de sorte que l'axe longitudinal du corps remorqué (4) soit orienté sensiblement parallèlement à l'axe du déflecteur (x) lorsque le corps remorqué (4) est totalement émergé et suspendu à la première suspente (6) et à la deuxième suspente (7).

2. Système sonar selon la revendication 1, dans lequel la première suspente (6) et la deuxième suspente (7) présentent chacune une longueur fixe.

3. Système sonar selon l'une quelconque des revendications précédentes, dans lequel la deuxième extrémité (6b) de la première suspente (6) est attachée à la première extrémité longitudinale (42) du corps remorqué (4) et la deuxième extrémité (7b) de la deuxième suspente (7) est attachée à la deuxième extrémité longitudinale (43) du corps remorqué (4).

4. Système sonar selon l'une quelconque des revendications précédentes, comprenant un corps allongé souple (3) de flottabilité sensiblement neutre destiné à être tracté par le câble tracteur (2) et comprenant une deuxième antenne acoustique (50) comprenant une pluralité de transducteurs électroacoustiques (41) répartis le long du corps allongé souple (3), le corps allongé souple (3) étant relié au câble tracteur (2) via l'ensemble d'au moins un corps remorqué (4), le corps remorqué (4) étant relié au corps allongé souple (3) de sorte que le corps allongé souple (3) exerce une traction sur le corps remorqué (4) en un troisième point de fixation situé à proximité de la première extrémité longitudinale (42) du corps remorqué et un quatrième point de fixation situé à proximité de la deuxième extrémité longitudinale (43) du corps remorqué.

5. Système sonar selon la revendication précédente, dans lequel au moins un corps remorqué de l'ensemble d'au moins un corps remorqué est relié au corps remorqué allongé souple (3) par une troisième suspente (8) et une quatrième suspente (9), une première extrémité (8a) de la troisième suspente (8) étant attachée au corps remorqué en un troisième point de fixation situé à proximité de la première extrémité longitudinale (42) du corps remorqué (4) et une première extrémité (9a) de la quatrième suspente (8) étant attachée au corps remorqué (4) en un quatrième point de fixation situé à proximité de la deuxième extrémité longitudinale (43) du corps remorqué.

6. Système sonar selon la revendication précédente, dans lequel l'ensemble d'au moins un corps remorqué comprend un unique corps remorqué ou plusieurs corps remorqués.

7. Système sonar selon la revendication précédente dans lequel l'ensemble d'au moins un corps remorqués comprend plusieurs corps remorqués, le dispositif sonar comprenant au moins une ligne reliant entre eux deux corps remorqués de l'ensemble et comprenant au moins un transducteur électroacoustique.

8. Système sonar selon l'une quelconque des revendications précédentes, dans lequel le dispositif tracté est le corps remorqué.

9. Système sonar selon la revendication précédente, dans lequel l'axe d'au moins un déflecteur (x) de l'ensemble est sensiblement parallèle au premier axe de rotation (x1).

10. Système sonar selon l'une quelconque des revendications précédentes, dans lequel au moins un déflecteur (60) de l'ensemble d'au moins un déflecteur est disposé de sorte que, lors de la première étape d'enroulement, la première suspente (6) et la deuxième suspente (7) sont aptes à venir en appui sur le déflecteur, lorsque le corps remorqué (4) est totalement immergé.

11. Système sonar selon l'une quelconque des revendications précédentes, dans lequel l'ensemble d'au moins un déflecteur comprend au moins un déflecteur disposé en amont du premier tambour, vu de la première suspente et de la deuxième suspente initialement immergées, lors de la première étape d'enroulement.

12. Système sonar selon l'une quelconque des revendications précédentes, dans lequel le treuil (11) comprend un ensemble d'au moins un deuxième tambour (14) entourant le premier tambour (13) et étant apte à tourner par rapport à un bâti (12) du treuil (11) autour d'un deuxième axe de rotation (x2) sensiblement parallèle au premier axe de rotation (x1), le treuil (11) étant apte à être dans un état de découplage dans lequel le premier tambour (13) et le deuxième tambour sont découplés en rotation autour du premier axe de rotation (x1) et du deuxième axe de rotation (x2), de sorte à permettre d'enrouler le câble tracteur (2) autour du premier tambour (13) lors de la première étape d'enroulement lors de laquelle le premier tambour est entraîné en rotation autour du premier axe (x1), le deuxième tambour (14) étant apte à être dans un état ouvert, dans lequel le deuxième tambour (14) présente une ouverture de réception (15) à travers laquelle le corps remorqué (4) est susceptible de passer lors de la première étape d'enroulement pour pénétrer à l'intérieur d'un volume qui entoure le premier tambour (13) et qui est entouré par le deuxième tambour (14), le treuil (11) étant apte à être dans un état de couplage dans lequel le premier tambour (13) et le deuxième tambour (14) sont couplés en rotation autour du deuxième axe de rotation (x2), de sorte à permettre d'enrouler le corps allongé souple autour du deuxième axe de rotation lors d'une deuxième étape d'enroulement lors de laquelle le deuxième tambour (14) est entraîné en rotation autour du deuxième axe (x2).

13. Système sonar selon la revendication précédente, dans lequel le deuxième tambour (14) est apte à être dans une position angulaire de réception, autour du deuxième axe (x2) par rapport au bâti (12), dans laquelle l'ouverture de réception (15) est traversée par le câble tracteur (2) et le corps remorqué (4) lors de la première étape d'enroulement.

14. Système sonar selon l'une quelconque des revendications précédentes, dans lequel le dispositif de manutention est configuré pour mettre en oeuvre l'étape suivante lors d'un procédé de récupération du dispositif sonar initialement immergé : la première étape d'enroulement lors de laquelle le premier tambour (13) est entraîné en rotation autour du premier axe (x1) de sorte que le câble tracteur (2) vienne s'enrouler autour du premier tambour (13), et de façon que la première suspente (6) et la deuxième suspente (7) viennent en appui sur le déflecteur (60) pour être déviées par le déflecteur de sorte que l'axe longitudinal du corps remorqué (4) soit orienté sensiblement parallèlement à l'axe du déflecteur (x), lorsque le corps remorqué (4) est totalement émergé et suspendu à la première suspente (6) et à la deuxième suspente (7).

15. Système sonar selon la revendication précédente en ce qu'elle dépend de la revendication 13, dans lequel le dispositif de manutention est configuré pour mettre en oeuvre la première étape d'enroulement jusqu'à ce que le corps remorqué (4) rentre dans le volume délimité par le deuxième tambour (14) au travers de l'ouverture de réception (15), puis une deuxième étape d'enroulement lors de laquelle le deuxième tambour (14) du dispositif de manutention, se trouvant dans le deuxième état, est entraîné en rotation autour du deuxième axe de rotation (x2) de sorte à enrouler le corps linéaire souple (3) autour du deuxième tambour (14).

## Patentansprüche

1. Sonarsystem, umfassend eine Sonarvorrichtung (1; 301), die dazu bestimmt ist, von einem Überwasserschiff (B) geschleppt zu werden, und umfassend ein Zugseil (2), und eine Anordnung aus mindestens einer gezogenen Vorrichtung, umfassend einen geschleppten Körper (4), der dazu bestimmt ist, von dem Überwasserschiff (B) über das Zugseil (2) geschleppt zu werden, wobei der geschleppte Körper (4) entlang einer Längsachse (l) von einem ersten Längsende (42) des geschleppten Körpers zu einem zweiten Längsende (43) des geschleppten Körpers (4) verlängert ist, wobei der geschleppte Körper (4) eine erste lineare akustische Antenne (40) aufnimmt, die eine Vielzahl von elektroakustischen Wandlern (41) umfasst, die im Wesentlichen entlang der Längsachse (l) ausgerichtet sind, wobei die gezogene Vorrichtung so konfiguriert und mit dem Zugseil verbunden ist, dass der geschleppte Körper (4) in der Lage ist, wenn er geschleppt wird und vollständig eingetaucht ist, eine Ausrichtung aufzuweisen, in der sich die Längsachse (l) im Wesentlichen entlang einer durch die Schwerkraft definierten vertikalen Achse erstreckt, wobei mindestens ein geschleppter Körper der Anordnung aus mindestens einer gezogenen Vorrichtung mit dem Zugseil (2) durch eine erste Leine (6) und eine zweite Leine (7) verbunden ist, die im Wesentlichen die gleiche Länge aufweisen, wobei ein erstes Ende (6a) der ersten Leine (6) und ein erstes Ende (7a) der zweiten Leine (7) mit dem Zugseil verbunden sind und ein zweites Ende (6b) der ersten Leine (6) am geschleppten Körper (4) an einem Befestigungspunkt (44) des geschleppten Körpers (4) angebracht ist, der sich in der Nähe des ersten Längsendes (42) befindet, und ein zweites Ende (7b) der zweiten Leine (7) am geschleppten Körper (4) an einem zweiten Befestigungspunkt (45) angebracht ist, der mit dem ersten Befestigungspunkt (44) fest verbunden ist und sich in der Nähe des zweiten Längsendes (43) befindet, wobei das Sonarsystem ferner eine Handhabungsvorrichtung (10; 210; 310) zum Aussetzen und zum Bergen der Sonarvorrichtung (1; 301) von dem Überwasserschiff umfasst, wobei die Handhabungsvorrichtung (10; 210; 310) eine Winde (11; 311) mit einer ersten Trommel (13) umfasst, die geeignet ist, sich um eine erste Drehachse (x1) zu drehen, um das Zugseil (2) um die erste Trommel (13) zu wickeln, **dadurch gekennzeichnet, dass** die Handhabungsvorrichtung (1; 301) eine Anordnung aus mindestens einem Deflektor (60) umfasst, der konvex ist und insgesamt die Form eines Abschnitts eines Zylinders aufweist, der sich in Längsrichtung entlang einer Achse des Deflektors (x) erstreckt, wobei der Deflektor (60) so angeordnet ist, dass er sich bei ruhiger See im Wesentlichen horizontal und im Wesentlichen senkrecht zu einer vertikalen Ebene erstreckt, die im Wesentlichen parallel zu einer Zugachse verläuft, die von der Handhabungsvorrichtung (310; 210) auf das Zugseil (2) bei einem ersten Aufwickelschritt ausgeübt wird, bei dem die erste Trommel (13) um die erste Achse (x1) in Drehung versetzt wird, sodass das Zugseil (2) um die erste Trommel (13) gewickelt wird und so, dass die erste Leine (6) und die zweite Leine (7) an dem Deflektor (60) in Anlage kommen, um durch den Deflektor abgelenkt zu werden, sodass die Längsachse des geschleppten Körpers (4) im Wesentlichen parallel zur Achse des Deflektors (x) ausgerichtet ist, wenn der geschleppte Körper (4) vollständig aufgetaucht und an der ersten Leine (6) und an der zweiten Leine (7) aufgehängt ist.

2. Sonarsystem nach Anspruch 1, wobei die erste Leine (6) und die zweite Leine (7) jeweils eine feste Länge aufweisen.

3. Sonarsystem nach einem der vorhergehenden Ansprüche, wobei das zweite Ende (6b) der ersten Leine (6) an dem ersten Längsende (42) des geschleppten Körpers (4) angebracht ist und das zweite Ende (7b) der zweiten Leine (7) an dem zweiten Längsende (43) des geschleppten Körpers (4) angebracht ist.

4. Sonarsystem nach einem der vorhergehenden Ansprüche, umfassend einen flexiblen länglichen Körper (3) mit im Wesentlichen neutralem Auftrieb, der dazu bestimmt ist, von dem Zugseil (2) gezogen zu werden, und umfassend eine zweite akustische Antenne (50), die eine Vielzahl von elektroakustischen Wandlern (41) umfasst, die entlang des flexiblen länglichen Körpers (3) verteilt sind, wobei der flexible längliche Körper (3) über die Anordnung aus mindestens einem geschleppten Körper (4) mit dem Zugseil (2) verbunden ist, wobei der geschleppte Körper (4) mit dem flexiblen länglichen Körper (3) so verbunden ist, dass der flexible längliche Körper (3) an einem dritten Befestigungspunkt, der sich in der Nähe des ersten Längsendes (42) des geschleppten Körpers befindet, und an einem vierten Befestigungspunkt, der sich in der Nähe des zweiten Längsendes (43) des geschleppten Körpers befindet, einen Zug auf den geschleppten Körper (4) ausübt.

5. Sonarsystem nach dem vorhergehenden Anspruch, wobei mindestens ein geschleppter Körper aus der Anordnung aus mindestens einem geschleppten Körper mit dem flexiblen länglichen geschleppten Körper (3) durch eine dritte Leine (8) und eine vierte Leine (9) verbunden ist, wobei ein erstes Ende (8a) der dritten Leine (8) an einem dritten Befestigungspunkt, der sich in der Nähe des ersten Längsendes (42) des geschleppten Körpers (4) befindet, an dem geschleppten Körper angebracht ist, und ein erstes Ende (9a) der vierten Leine (8) an einem vierten Befestigungspunkt, der sich in der Nähe des zweiten Längsendes (43) des geschleppten Körpers befindet, an dem geschleppten Körper (4) angebracht ist.

6. Sonarsystem nach dem vorhergehenden Anspruch, wobei die Anordnung aus mindestens einem geschleppten Körper einen einzelnen geschleppten Körper oder mehrere geschleppte Körper umfasst.

7. Sonarsystem nach dem vorhergehenden Anspruch, wobei die Anordnung aus mindestens einem geschleppten Körper mehrere geschleppte Körper umfasst, wobei die Sonarvorrichtung mindestens eine Leitung umfasst, die zwei geschleppte Körper der Anordnung miteinander verbindet, und mindestens einen elektroakustischen Wandler umfasst.

8. Sonarsystem nach einem der vorhergehenden Ansprüche, wobei die gezogene Vorrichtung der geschleppte Körper ist.

9. Sonarsystem nach dem vorhergehenden Anspruch, wobei die Achse von mindestens einem Deflektor (x) der Anordnung im Wesentlichen parallel zur ersten Drehachse (x1) ist.

10. Sonarsystem nach einem der vorhergehenden Ansprüche, wobei mindestens ein Deflektor (60) der Anordnung aus mindestens einem Deflektor so angeordnet ist, dass während des ersten Aufwickelschritts die erste Leine (6) und die zweite Leine (7) in der Lage sind, an dem Deflektor zur Anlage zu kommen, wenn der geschleppte Körper (4) vollständig untergetaucht ist.

11. Sonarsystem nach einem der vorhergehenden Ansprüche, wobei die Anordnung aus mindestens einem Deflektor mindestens einen Deflektor umfasst, der während des ersten Aufwickelschritts von der ersten Leine und der zweiten Leine aus gesehen, die anfänglich eingetaucht sind, der ersten Trommel vorgelagert angeordnet ist.

12. Sonarsystem nach einem der vorhergehenden Ansprüche, wobei die Winde (11) eine Anordnung aus mindestens einer zweiten Trommel (14) umfasst, die die erste Trommel (13) umgibt und in der Lage ist, sich relativ zu einem Rahmen (12) der Winde (11) um eine zweite Drehachse (x2) zu drehen, die im Wesentlichen parallel zur ersten Drehachse (x1) ist, wobei die Winde (11) in der Lage ist, sich in einem Entkopplungszustand zu befinden, in dem die erste Trommel (13) und die zweite Trommel um die erste Drehachse (x1) und die zweite Drehachse (x2) drehentkoppelt sind, sodass das Zugseil (2) während des ersten Aufwickelschritts, bei dem die erste Trommel um die erste Achse (x1) gedreht wird, um die erste Trommel (13) gewickelt werden kann, wobei die zweite Trommel (14) in der Lage ist, sich in einem offenen Zustand zu befinden, in dem die zweite Trommel (14) eine Aufnahmeöffnung (15) aufweist, durch die der geschleppte Körper (4) während des ersten Aufwickelschritts in das Innere eines Volumens gelangen kann, das die erste Trommel (13) umgibt und das von der zweiten Trommel (14) umgeben ist, wobei die Winde (11) in der Lage ist, sich in einem Kopplungszustand zu befinden, in dem die erste Trommel (13) und die zweite Trommel (14) um die zweite Drehachse (x2) drehbar gekoppelt sind, sodass der flexible längliche Körper in einem zweiten Aufwickelschritt, in dem die zweite Trommel (14) um die zweite Achse (x2) gedreht wird, um die zweite Drehachse gewickelt werden kann.

13. Sonarsystem nach dem vorhergehenden Anspruch, wobei die zweite Trommel (14) in der Lage ist, sich in einer Aufnahmewinkelposition um die zweite Achse (x2) relativ zum Rahmen (12) zu befinden, in der die Aufnahmeöffnung (15) während des ersten Aufwickelschritts vom Zugseil (2) und dem geschleppten Körper (4) durchquert wird.

14. Sonarsystem nach einem der vorhergehenden Ansprüche, wobei die Handhabungsvorrichtung so konfiguriert ist, dass sie bei einem Verfahren zum Bergen der ursprünglich eingetauchten Sonarvorrichtung den folgenden Schritt vollzieht: den ersten Aufwickelschritt, bei dem die erste Trommel (13) um die erste Achse (x1) gedreht wird, sodass das Zugseil (2) um die erste Trommel (13) gewickelt wird, und so, dass die erste Leine (6) und die zweite Leine (7) an dem Deflektor (60) zur Anlage kommen, um von dem Deflektor so abgelenkt zu werden, dass die Längsachse des geschleppten Körpers (4) im Wesentlichen parallel zu der Achse des Deflektors (x) ausgerichtet ist, wenn der geschleppte Körper (4) vollständig aufgetaucht und an der ersten Leine (6) und an der zweiten Leine (7) aufgehängt ist.

15. Sonarsystem nach dem vorhergehenden Anspruch in Abhängigkeit von Anspruch 13, wobei die Handhabungsvorrichtung so konfiguriert ist, dass sie den ersten Aufwickelschritt vollzieht, bis der geschleppte Körper (4) durch die Aufnahmeöffnung (15) in das von der zweiten Trommel (14) umgrenzte Volumen eintritt, dann einen zweiten Aufwickelschritt, bei dem die zweite Trommel (14) der Handhabungsvorrichtung, die sich im zweiten Zustand befindet, um die zweite Drehachse (x2) gedreht wird, um den flexiblen linearen Körper (3) um die zweite Trommel (14) zu wickeln.

## Claims

1. A sonar system comprising a sonar device (1; 301) which is intended to be towed by a surface vessel (B) and which comprises a haulage cable (2) and an assembly of at least one hauled device, comprising a towed body (4) which is intended to be hauled by the surface vessel (B) via the haulage cable (2), the towed body (4) being elongate along a longitudinal axis (l) from a first longitudinal end (42) of the towed body up to a second longitudinal end (43) of the towed body (4), the towed body (4) incorporating a first linear acoustic antenna (40) comprising a plurality of electroacoustic transducers (41) which are substantially aligned along the longitudinal axis (1), the hauled device being configured and connected to the haulage cable so that the towed body (4) is capable of having, when it is towed and completely immersed, an orientation in which the longitudinal axis (l) extends substantially along a vertical axis defined by gravitational force, at least one towed body of the assembly of at least one hauled device being connected to the haulage cable (2) via a first hanger (6) and a second hanger (7) having substantially the same length, a first end (6a) of the first hanger (6) and a first end (7a) of the second hanger (7) being connected to the haulage cable and a second end (6b) of the first hanger (6) being attached to the towed body (4) at a fixing point (44) of the towed body (4) which is located close to the first longitudinal end (42) and a second end (7b) of the second hanger (7) being attached to the towed body (4) at a second fixing point (45) which is fixedly joined to the first fixing point (44) and which is located close to the second longitudinal end (43), the sonar system further comprising a handling device (10; 210; 310) which is intended to place in water and recover the sonar device (1; 301) from the surface vessel, the handling device (10; 210; 310) comprising a winch (11; 311) which comprises a first drum (13) which is capable of rotating about a first rotation axis (x1) to wind up the haulage cable (2) around the first drum (13), **characterised in that** the handling device (1; 301) comprises an assembly of at least one convex deflector (60) which is generally in the form of a portion of a cylinder which extends longitudinally along an axis of the deflector (x), the deflector (60) being arranged so as to extend substantially horizontally, when the sea is in a calm state, and substantially perpendicularly to a vertical plane which is substantially parallel with a traction axis which is applied to the haulage cable (2) by the handling device (310; 210) during a first winding step during which the first drum (13) is rotatably driven about the first axis (x1) so that the haulage cable (2) is wound up around the first drum (13) and so that the first hanger (6) and the second hanger (7) move into abutment with the deflector (60) to be deflected by the deflector so that the longitudinal axis of the towed body (4) is orientated substantially parallel with the axis of the deflector (x) when the towed body (4) has completely emerged and is suspended on the first hanger (6) and on the second hanger (7).

2. The sonar system according to claim 1, wherein the first hanger (6) and the second hanger (7) each have a fixed length.

3. The sonar system according to either of the preceding claims, wherein the second end (6b) of the first hanger (6) is attached to the first longitudinal end (42) of the towed body (4) and the second end (7b) of the second hanger (7) is attached to the second longitudinal end (43) of the towed body (4).

4. The sonar system according to any one of the preceding claims, comprising a flexible elongate body (3) of substantially neutral buoyancy which is intended to be hauled by the haulage cable (2) and which comprises a second acoustic antenna (50) which comprises a plurality of electroacoustic transducers (41) which are distributed along the flexible elongate body (3), the flexible elongate body (3) being connected to the haulage cable (2) via the assembly of at least one towed body (4), the towed body (4) being connected to the flexible elongate body (3) so that the flexible elongate body (3) applies a traction to the towed body (4) at a third fixing point located close to the first longitudinal end (42) of the towed body and a fourth fixing point located close to the second longitudinal end (43) of the towed body.

5. The sonar system according to the preceding claim, wherein at least one towed body of the assembly of at least one towed body is connected to the flexible elongate towed body (3) by a third hanger (8) and a fourth hanger (9), a first end (8a) of the third hanger (8) being attached to the towed body at a third fixing point which is located close to the first longitudinal end (42) of the towed body (4) and a first end (9a) of the fourth hanger (8) being attached to the towed body (4) at a fourth fixing point located close to the second longitudinal end (43) of the towed body.

6. The sonar system according to the preceding claim, wherein the assembly of at least one towed body comprises a single towed body or multiple towed bodies.

7. The sonar system according to the preceding claim, wherein the assembly of at least one towed body comprises multiple towed bodies, the sonar device comprising at least one line which connects together two towed bodies of the assembly and which comprises at least one electroacoustic transducer.

8. The sonar system according to any one of the preceding claims, wherein the hauled device is the towed body.

9. The sonar system according to the preceding claim, wherein the axis of at least one deflector (x) of the assembly is substantially parallel with the first rotation axis (x1).

10. The sonar system according to any one of the preceding claims, wherein at least one deflector (60) of the assembly of at least one deflector is arranged so that, during the first winding step, the first hanger (6) and the second hanger (7) are capable of moving into abutment with the deflector when the towed body (4) is completely immersed.

11. The sonar system according to any one of the preceding claims, wherein the assembly of at least one deflector comprises at least one deflector which is arranged upstream of the first drum, when viewed from the first hanger and the second hanger which are initially immersed, during the first winding step.

12. The sonar system according to any one of the preceding claims, wherein the winch (11) comprises an assembly of at least one second drum (14) which surrounds the first drum (13) and which is capable of rotating relative to a frame (12) of the winch (11) about a second rotation axis (x2) which is substantially parallel with the first rotation axis (x1), the winch (11) being capable of being in a decoupling state in which the first drum (13) and the second drum are uncoupled in terms of rotation about the first rotation axis (x1) and the second rotation axis (x2) in order to enable the haulage cable (2) to be wound around the first drum (13) during the first winding step during which the first drum is driven in terms of rotation about the first axis (x1), the second drum (14) being capable of being in an open state in which the second drum (14) has a receiving opening (15) through which the towed body (4) is capable of passing during the first winding step to be introduced inside a volume which surrounds the first drum (13) and which is surrounded by the second drum (14), the winch (11) being capable of being in a coupling state in which the first drum (13) and the second drum (14) are coupled in terms of rotation about the second rotation axis (x2) in order to enable the flexible elongate body to be wound about the second rotation axis during a second winding step during which the second drum (14) is driven in terms of rotation about the second axis (x2).

13. The sonar system according to the preceding claim, wherein the second drum (14) is capable of being in an angular receiving position, around the second axis (x2) relative to the frame (12), in which the haulage cable (2) and the towed body (4) pass through the receiving opening (15) during the first winding step.

14. The sonar system according to any one of the preceding claims, wherein the handling device is configured to implement the following step during a method for recovering the sonar device which is initially immersed: the first winding step during which the first drum (13) is rotatably driven about the first axis (x1) so that the haulage cable (2) is wound around the first drum (13) and so that the first hanger (6) and the second hanger (7) move into abutment with the deflector (60) to be deflected by the deflector so that the longitudinal axis of the towed body (4) is orientated substantially parallel with the axis of the deflector (x) when the towed body (4) has completely emerged and is suspended on the first hanger (6) and on the second hanger (7).

15. The sonar system according to the preceding claim, when it is dependent on claim 13, wherein the handling device is configured to implement the first winding step until the towed body (4) returns into the volume delimited by the second drum (14) through the receiving opening (15), then a second winding step during which the second drum (14) of the handling device, which is in the second state, is rotatingly driven about the second rotation axis (x2) in order to wind up the flexible linear body (3) around the second drum (14).
